# EUROPEAN PATENT SPECIFICATION

(11) **EP 4 023 895 B1**
(45) Date of publication and mention of the grant of the patent: **30.10.2024**
(21) Application number: 20868525.5
(22) Date of filing: 17.08.2020
(51) Int. Cl.: G06F 1/16, E05D 11/08, H04M 1/02

(54) **HINGE STRUCTURE AND FOLDABLE ELECTRONIC DEVICE**
SCHARNIERSTRUKTUR UND KLAPPBARE ELEKTRONISCHE VORRICHTUNG
STRUCTURE DE CHARNIÈRE ET DISPOSITIF ÉLECTRONIQUE PLIABLE

(30) Priority: 24.09.2019 CN 201910905927
(43) Date of publication of application: 06.07.2022
(73) Proprietor: Huawei Technologies Co., Ltd., Longgang District Shenzhen, Guangdong 518129 (CN)
(72) Inventor: ZHU, Mingchao, Shenzhen, Guangdong 518129 (CN); LONG, Teng, Shenzhen, Guangdong 518129 (CN); ZHONG, Meifang, Shenzhen, Guangdong 518129 (CN); YANG, Jun, Shenzhen, Guangdong 518129 (CN)
(74) Representative: Isarpatent
(86) International application number: PCT/CN2020/109566
(87) International publication number: WO 2021/057333

(56) References cited:
- CN-A- 108 757 716
- CN-A- 108 916 211
- CN-A- 110 792 688
- CN-U- 202 991 827
- CN-Y- 201 078 397
- CN-Y- 201 225 362
- JP-A- H0 865 369
- TW-U- M 324 133
- US-A1- 2006 117 530
- US-A1- 2007 186 382
- US-A1- 2015 000 465

## Description

### CROSS-REFERENCE TO RELATED APPLICATIONS

Priority is claimed to Chinese Patent Application No. 201910905927.2, filed with the China National Intellectual Property Administration on September 24, 2019 and entitled "HINGE STRUCTURE AND FOLDABLE ELECTRONIC DEVICE"

### TECHNICAL FIELD

This disclosure generally relates to the field of electronic device technologies, and the invention in particular relates to a hinge structure and a foldable electronic device.

### BACKGROUND

A hinge structure is a key component for connecting a foldable electronic device, and is mainly used to connect different bodies of the foldable electronic device and provide damping. A notebook computer is used as an example. The hinge structure is mainly configured to connect a screen to a keyboard base of the notebook computer, and provide, in a normal use process, supporting force for the screen by using torque generated by the hinge structure. In a conventional hinge structure, to provide sufficient supporting force when the screen of the notebook computer is unfolded to be used, torque generated by the hinge structure is usually greater than gravity of the screen. Therefore, for a notebook computer with a light keyboard base, in the conventional hinge structure, it is very difficult to unfold a screen of the notebook computer with one hand. To be specific, the keyboard base is lifted together when the screen is unfolded. In this case, a user needs to press the keyboard base with one hand, and the screen can be unfolded only when the other hand applies force on the screen to rotate the screen in a direction away from the keyboard base. Such an operation compromises user experience.

To resolve this problem, a current conventional operation is to reduce a weight of the screen of the notebook computer and increase a weight of the keyboard base, to unfold the screen with one hand. However, costs of the screen increase as a technological requirement for reducing the weight of the screen is improved, and the entire notebook computer increases in weight as the weight of the keyboard base increases. It is inconvenient to use and carry. The screen of the notebook computer easily falls because the hinge structure cannot provide sufficient support for the screen being used if the torque of the hinge structure is reduced. Screen falling means that the screen of the notebook computer being used suddenly falls toward the keyboard base.

US 2006/117530 A1 relates to a hinge for a notebook. The hinge includes an L-shaped seat with a barrel. A pintle has a shaft extending in the barrel of the seat. A first tube, a sleeve and a second tube are mounted on the shaft. The first and second tubes are securely received in the barrel, each with a stop formed at a respective end facing the sleeve. The sleeve has two arcuate segments formed at two ends and corresponding to the stops of the tubes. Thus, the sleeve is rotated along the shaft about the first and second tubes until one arcuate segment of the sleeve abuts the corresponding stop. A user can raise the display with a small force to separate the display from the body and a large force to raise and position the display simultaneously.

CN 202 991 827 U relates to a rotating shaft structure. The rotating shaft structure rotates a first machine body relative to a second machine body. The rotating shaft structure comprises a shaft body, a pivoting piece, a first friction piece and a second friction piece. The shaft body connects to the first machine body. The pivoting piece connects the shaft body in a pivoted mode and used for being connected to the second machine body. The first friction piece is fixed on the shaft body and contacts the pivoting piece. The second friction piece comprises a through hole and at least one protruding block arranged in the through hole. The shaft body is arranged in the through hole in a penetrating mode and provided with an idling range relative to the second friction piece. The second friction piece contacts the pivoting piece. When located in the idling range relative to the second friction piece, the shaft body does not contact the protruding blocks of the second friction piece and rotates relative to the second friction piece. When the shaft body rotates and contacts the protruding blocks, the shaft body drives the second friction piece to rotate relative to the pivoting piece. The rotating shaft structure supply different degrees of torque force.

### SUMMARY

The object of the invention is to provide a hinge structure and a foldable electronic device. The hinge structure is used in the foldable electronic device, to unfold the foldable electronic device with one hand without increasing costs and an overall weight, and ensure stability of the foldable electronic device in an unfolded state. This object is solved by the attached independent claims, and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the claimed invention or its embodiments.

According to a first aspect according to the invention, the invention provides a hinge structure. The hinge structure includes a shaft sleeve, a first rotating shaft, and a second rotating shaft. When the hinge structure is used in a foldable electronic device (for example, a notebook computer), the shaft sleeve is connected to a first body (for example, a keyboard base of the notebook computer) of the foldable electronic device, and the first rotating shaft is connected to a second body (for example, a screen of the notebook computer) of the foldable electronic device. The first rotating shaft stretches into the shaft sleeve and may be rotated around an axis of the first rotating shaft relative to the shaft sleeve, and the first rotating shaft frictionally fits the shaft sleeve when being rotated relative to the shaft sleeve. The second rotating shaft stretches into the shaft sleeve and may be rotated around an axis of the second rotating shaft relative to the shaft sleeve, and the second rotating shaft fits the shaft sleeve when being rotated relative to the shaft sleeve. In a process in which the foldable electronic device changes from a folded state to an unfolded state, an included angle between the first body and the second body gradually increases, and the first rotating shaft is rotated relative to the shaft sleeve, and first torque is generated due to friction between the first rotating shaft and the shaft sleeve. The second rotating shaft and the shaft sleeve have two different torque output states in the process in which the foldable electronic device changes from the folded state to the unfolded state. When the included angle between the first body and the second body is less than or equal to a first angle, no torque is output between the second rotating shaft and the shaft sleeve, and the entire hinge structure outputs only the first torque generated during frictional rotation between the first rotating shaft and the shaft sleeve. In this case, the first torque is small, and it is convenient for a user to unfold the foldable electronic device with one hand. When the included angle between the first body and the second body is greater than a first angle and less than a second angle (the second angle herein is certainly greater than the first angle), in addition to the first torque generated due to the friction between the first rotating shaft and the shaft sleeve, third torque is further generated when the second rotating shaft frictionally fits the shaft sleeve. A sum of the first torque and the third torque is set as second torque. The second torque herein is greater than the first torque. Under an action of the second torque, the first body can remain in the stable unfolded state relative to the second body, so that the user can operate the foldable electronic device, which is convenient.

For the foldable electronic device, there may be a maximum unfolding angle. To be specific, there is a maximum included angle between the first body and the second body. To limit the maximum unfolding angle, a stopping block may further be disposed on the shaft sleeve of the hinge structure. Correspondingly, a stopping member is disposed on the first rotating shaft. When the first rotating shaft is rotated relative to the shaft sleeve, the stopping member and the stopping block work together to limit a maximum rotation angle of the first rotating shaft relative to the shaft sleeve, to limit the maximum included angle between the first body and the second body.

As described above, when the included angle between the first body and the second body is greater than the first angle and less than the second angle, the third torque needs to be output between the second rotating shaft and the shaft sleeve when the first torque is output between the first rotating shaft and the shaft sleeve. To achieve this effect, According to the invention, the first rotating shaft may be rotated around the axis of the first rotating shaft relative to the second rotating shaft, and a position-limiting mechanism is disposed between the second rotating shaft and the first rotating shaft, where the position-limiting mechanism is configured to limit a rotation angle of the first rotating shaft relative to the second rotating shaft to being less than the first angle. When the included angle between the first body and the second body is less than or equal to the first angle, the first rotating shaft is rotated relative to the second rotating shaft. In this case, the first rotating shaft is rotated relative to the shaft sleeve, and the second rotating shaft is stationary to the shaft sleeve. The position-limiting mechanism can limit the rotation of the first rotating shaft relative to the second rotating shaft to being within the first angle. When the rotation angle of the first rotating shaft relative to the second rotating shaft is greater than the first angle, under a position-limiting action of the position-limiting mechanism, the first rotating shaft drives the second rotating shaft to rotate together, to implement linkage. In this case, the first torque is generated when the first rotating shaft is frictionally rotated relative to the shaft sleeve, third torque is further generated when the second rotating shaft is frictionally rotated relative to the shaft sleeve, and the hinge structure integrally outputs the second torque obtained by adding the first torque and the third torque. The first rotating shaft may rotationally fit the second rotating shaft through a shaft hole.

Based on the foregoing structure, the shaft sleeve may be split into a first shaft sleeve and a second shaft sleeve that are stationary to each other. The first rotating shaft stretches into the first shaft sleeve and may be rotated around the axis of the first rotating shaft relative to the first shaft sleeve, and the first rotating shaft frictionally fits the first shaft sleeve when being rotated relative to the first shaft sleeve. The second rotating shaft is installed in the second shaft sleeve and may be rotated around the axis of the second rotating shaft relative to the second shaft sleeve, and the second rotating shaft frictionally fits the second shaft sleeve when being rotated relative to the second shaft sleeve. A possible installation manner of the hinge structure is provided by using such a structure. The first rotating shaft and the second rotating shaft can flexibly fit the shaft sleeve based on a use scenario. In addition, in this structure of the shaft sleeve, interference fit may be used between the first rotating shaft and the first shaft sleeve, or a friction washer may be disposed between the first rotating shaft and the first shaft sleeve, to generate the first torque due to friction when the first rotating shaft is rotated relative to the first shaft sleeve. Certainly, a manner similar to that of fitting between the first rotating shaft and the first shaft sleeve may also be used between the second rotating shaft and the second shaft sleeve, so that when driven by the first rotating shaft to rotate relative to the second shaft sleeve, the third torque is generated when the second rotating shaft frictionally fits the second shaft sleeve.

Specifically, the position-limiting mechanism disposed between the first rotating shaft and the second rotating shaft needs to be disposed based on specific structures of the first rotating shaft and the second rotating shaft.

In a possible implementation, a sleeve ring may be formed on the second rotating shaft. The sleeve ring may be sleeved on the first rotating shaft, so that the first rotating shaft can be frictionlessly rotated relative to the sleeve ring. A first protrusion is formed on an inner wall of the sleeve ring, and a second protrusion is formed on the first rotating shaft. The first protrusion and the second protrusion herein are equivalent to the position-limiting mechanism. When the first rotating shaft is rotated relative to the second rotating shaft, the first protrusion and the second protrusion are configured to fit to limit the rotation angle of the first rotating shaft relative to the second rotating shaft. In addition, the sleeve ring may further frictionally fit the shaft sleeve. When the sleeve ring is rotated relative to the shaft sleeve, the third torque may be generated between the sleeve ring and the shaft sleeve.

According to the invention, the first rotating shaft and the second rotating shaft are disposed opposite to each other. The position-limiting mechanism may include a position-limiting member and a rotating member. The position-limiting member may be disposed on one of the second rotating shaft and the first rotating shaft. Correspondingly, the rotating member is disposed on the other of the second rotating shaft and the first rotating shaft. Positions at which the position-limiting member and the rotating member are disposed may be exchanged with each other. An avoidance notch is formed on one side that is of the position-limiting member and that faces the rotating member, and the avoidance notch is configured to fit the rotating member, to limit the rotating member to being rotated within the first angle relative to the position-limiting member, so as to limit the first rotating shaft to being rotated within the first angle relative to the second rotating shaft. It is ensured that when the included angle of the first body relative to the second body is less than the first angle, only the first rotating shaft is rotated relative to the shaft sleeve, and the second rotating shaft is stationary to the shaft sleeve. In this case, the entire hinge structure outputs only the first torque. When the included angle between the first body and the second body is greater than the first angle and less than the second angle, the second rotating shaft is pushed to rotate together by the rotation of the first rotating shaft due to fitting between the rotating member and the position-limiting member, so that the second rotating shaft is rotated relative to the shaft sleeve (when the shaft sleeve is split into the first shaft sleeve and the second shaft sleeve, the second rotating shaft is rotated relative to the second shaft sleeve), to output the third torque, and the entire hinge structure outputs the second torque obtained by adding the first torque and the third torque.

The position-limiting member may include a connection end face and a position-limiting boss that protrudes from the connection end face toward the rotating member, and the connection end face is perpendicular to a rotating axis of the rotating member. The avoidance notch is formed between the position-limiting boss and the connection end face. Alternatively, the position-limiting member may include a connection end face and a position-limiting groove formed on the connection end face, and the connection end face is perpendicular to a rotation axis of the rotating member. A structure of the position-limiting groove herein forms the avoidance notch. Rotation space in which the rotating member is rotated in both the two implementations of the avoidance notch.

When the position-limiting member is implemented by using structures of the connection end face and a position-limiting protrusion, a section that is of the position-limiting boss and that is parallel to the connection end face may be fan-shaped or arc-shaped. Based on this, the position-limiting boss may have a plurality of variant structures. For example, a gap may be formed on the position-limiting boss. In addition, an outer diameter of the position-limiting boss may be less than an outer diameter of the connection end face, or an outer diameter of the connection end face may be less than an outer diameter of the second rotating shaft. A shaft shoulder may be formed on the position-limiting member by using the two structural variations. When the position-limiting member is implemented by using structures of the connection end face and the position-limiting groove, a section that is of the position-limiting groove and that is parallel to the connection end face may also be fan-shaped or arc-shaped.

In another possible implementation, the hinge structure may include a first shaft sleeve and a second shaft sleeve. The first rotating shaft stretches into the first shaft sleeve and may be rotated around the axis of the first rotating shaft relative to the first shaft sleeve, and the first rotating shaft frictionally fits the first shaft sleeve when being rotated relative to the first shaft sleeve. The second rotating shaft stretches into the second shaft sleeve and may be rotated around the axis of the second rotating shaft relative to the second shaft sleeve, and the second rotating shaft fits the second shaft sleeve when being rotated relative to the second shaft sleeve.

In this not-claimed structure, there is no corresponding fitting relationship between the first rotating shaft and the second rotating shaft. Correspondingly, in the process in which the foldable electronic device changes from the folded state to the unfolded state, when the included angle between the first body and the second body is less than or equal to the first angle, the second rotating shaft frictionlessly and rotationally fits the second shaft sleeve. When the included angle between the first body and the second body is greater than the first angle and less than the second angle, the third torque is generated when the second rotating shaft frictionally and rotationally fits the second shaft sleeve.

To implement the fitting between the second rotating shaft and the second shaft sleeve, the second rotating shaft may have a friction part that protrudes from a peripheral face of the second rotating shaft, and the friction part can frictionally fit the second shaft sleeve. Correspondingly, a groove area that can accommodate the friction part is disposed on the second shaft sleeve, and an angle that corresponds to the groove area in a direction encircling the axis of the second shaft sleeve is the first angle. Specifically, in the process in which the foldable electronic device changes from the folded state to the unfolded state, when the included angle between the first body and the second body is less than or equal to the first angle, the second rotating shaft is rotated relative to the second shaft sleeve, and the friction part is located in the groove area of the second shaft sleeve. When the included angle between the first body and the second body is greater than the first angle and less than the second angle, the second rotating shaft needs to frictionally and rotationally fit the second shaft sleeve. The second rotating shaft is rotated relative to the second shaft sleeve, and the friction part of the second rotating shaft is located outside the groove area of the second shaft sleeve. The third torque is generated due to friction between the friction part on the second rotating shaft and the second shaft sleeve.

According to another aspect according to the invention, the invention provides a foldable electronic device. The foldable electronic device includes a first body and a second body. To implement a foldable function between the first body and the second body, any hinge structure provided in the foregoing technical solutions is disposed between the first body and the second body. Specifically, a shaft sleeve of the hinge structure may be connected to the first body, and a first rotating shaft of the hinge structure may be connected to the second body.

In the following description, features which in the above summary of the invention have been marked as "not claimed" or "according to the invention" are also hereinafter, when they are described and explained with reference to the drawings, to be understood as "not claimed" or "not part of the invention" or "according to the invention".

### BRIEF DESCRIPTION OF DRAWINGS

FIG. 1 is a schematic diagram of a structure of an existing foldable electronic device in a folded state;
FIG. 2 is a schematic diagram of a structure of an existing foldable electronic device in an unfolded state;
FIG. 3 is a schematic diagram of a structure of an existing foldable electronic device in an unfolded state;
FIG. 4 is a schematic diagram of a torque curve of a hinge structure in a process of unfolding a foldable electronic device in the conventional technology;
FIG. 5 is a schematic diagram of a torque curve of another hinge structure in a process of unfolding a foldable electronic device in the conventional technology;
FIG. 6 is a schematic diagram of a torque curve of a hinge structure in a process of unfolding a foldable electronic device according to an embodiment of the present invention;
FIG. 7 is a schematic diagram of a structure of a hinge structure according to Embodiment 1 of the present invention;
FIG. 8 is an exploded view of a hinge structure according to Embodiment 1 of the present invention;
FIG. 9 is a schematic diagram of an assembly structure of a shaft sleeve and a first rotating shaft of a hinge structure according to Embodiment 1 of the present invention;
FIG. 10 is a schematic diagram of a structure in which a stopping block of a shaft sleeve fits a stopping member of a first rotating shaft of a hinge structure according to Embodiment 1 of the present invention;
FIG. 11 is a schematic diagram of a structure in a fitting state of a first rotating shaft and a second rotating shaft of a hinge structure according to Embodiment 1 of the present invention;
FIG. 12 is a schematic diagram of a structure in which a first rotating shaft is rotated relative to a second rotating shaft of a hinge structure according to Embodiment 1 of the present invention;
FIG. 13 is a schematic diagram of a structure in another fitting state of a first rotating shaft and a second rotating shaft of a hinge structure according to Embodiment 1 of the present invention;
FIG. 14 is a schematic diagram of a structure in a fitting state in which a first rotating shaft is reversely rotated relative to a second rotating shaft of a hinge structure according to Embodiment 1 of the present invention;
FIG. 15 is a schematic diagram of a structure in a fitting state in which a first rotating shaft is reversely rotated by a first angle relative to a second rotating shaft of a hinge structure according to Embodiment 1 of the present invention;
FIG. 16 is a schematic diagram of a structure in a fitting state in which a first rotating shaft is reversely rotated relative to a second rotating shaft of a hinge structure according to Embodiment 1 of the present invention;
FIG. 17 is a schematic diagram of torque curves of a hinge structure in an unfolding process and a folding process of a foldable electronic device according to Embodiment 1 of the present invention;
FIG. 18 is a schematic diagram of a structure of a position-limiting member of a hinge structure according to Embodiment 1 of the present invention;
FIG. 19 is a schematic diagram of a structure of a position-limiting member of a hinge structure according to Embodiment 1 of the present invention;
FIG. 20 is a schematic diagram of a structure of a position-limiting member of a hinge structure according to Embodiment 1 of the present invention;
FIG. 21 is a schematic diagram of a structure of a position-limiting member of a hinge structure according to Embodiment 1 of the present invention;
FIG. 22 is a schematic diagram of a structure of a position-limiting member of a hinge structure according to Embodiment 1 of the present invention;
FIG. 23 is a schematic diagram of a structure of a position-limiting member of a hinge structure according to Embodiment 1 of the present invention;
FIG. 24 is a schematic diagram of a structure of a position-limiting member of a hinge structure according to Embodiment 1 of the present invention;
FIG. 25 is a schematic diagram of a structure of a position-limiting member of a hinge structure according to Embodiment 1 of the present invention;
FIG. 26 is a schematic diagram of a structure of a position-limiting member of a hinge structure according to Embodiment 1 of the present invention;
FIG. 27 is a schematic diagram of a structure of a position-limiting member of a hinge structure according to Embodiment 1 of the present invention;
FIG. 28 is a schematic diagram of a structure of a position-limiting member of a hinge structure according to Embodiment 1 of the present invention;
FIG. 29 is a schematic diagram of a structure of a position-limiting member of a hinge structure according to Embodiment 1 of the present invention;
FIG. 30 is a schematic diagram of a structure of a position-limiting member of a hinge structure according to Embodiment 1 of the present invention;
FIG. 31 is a schematic diagram of a structure of a position-limiting member of a hinge structure according to Embodiment 1 of the present invention;
FIG. 32 is a schematic diagram of a structure of a position-limiting member of a hinge structure according to Embodiment 1 of the present invention;
FIG. 33 is a schematic diagram of a structure of a position-limiting member of a hinge structure according to Embodiment 1 of the present invention;
FIG. 34 is a schematic diagram of a structure of a position-limiting member of a hinge structure according to Embodiment 1 of the present invention;
FIG. 35 is a schematic diagram of a structure of a position-limiting member of a hinge structure according to Embodiment 1 of the present invention;
FIG. 36 is a schematic diagram of a structure of a hinge structure according to Embodiment 2 of the present invention;
FIG. 37 is an exploded view of a hinge structure according to Embodiment 2 of the present invention;
FIG. 38 is an exploded view of a hinge structure according to Embodiment 2 of the present invention;
FIG. 39 is a schematic diagram of a structure of a hinge structure according to Embodiment 3 of the present invention;
FIG. 40 is an exploded view of a hinge structure according to Embodiment 3 of the present invention;
FIG. 41 is a schematic diagram of a sectional structure in which a second rotating shaft fits a second shaft sleeve of a hinge structure according to Embodiment 4 of the present invention;
FIG. 42 is a schematic diagram of a sectional structure in which a second rotating shaft fits a second shaft sleeve of a hinge structure according to Embodiment 4 of the present invention;
FIG. 43 is a schematic diagram of a sectional structure in which a second rotating shaft fits a second shaft sleeve of a hinge structure according to Embodiment 4 of the present invention;
FIG. 44 is a schematic diagram of a structure of a hinge structure according to Embodiment 5 of the present invention;
FIG. 45 is a schematic diagram of a structure of a shaft sleeve and a second rotating shaft of a hinge structure according to Embodiment 5 of the present invention;
FIG. 46 is a schematic diagram of a sectional structure in which a first rotating shaft fits a second rotating shaft of a hinge structure according to Embodiment 5 of the present invention;
FIG. 47 is a schematic diagram of a sectional structure of a hinge structure according to a first comparative example outside the scope 6 of the present invention;
FIG. 48 is a schematic diagram of a sectional structure of a hinge structure according to a second comparative example outside the scope of the present invention;
FIG. 49 is a schematic diagram of a sectional structure of a hinge structure according to the second comparative example; and
FIG. 50 is a schematic diagram of a sectional structure of a hinge structure according to the second comparative example.

### DESCRIPTION OF EMBODIMENTS

The following clearly and completely describes the technical solutions in embodiments of this application with reference to the accompanying drawings in embodiments of this application.

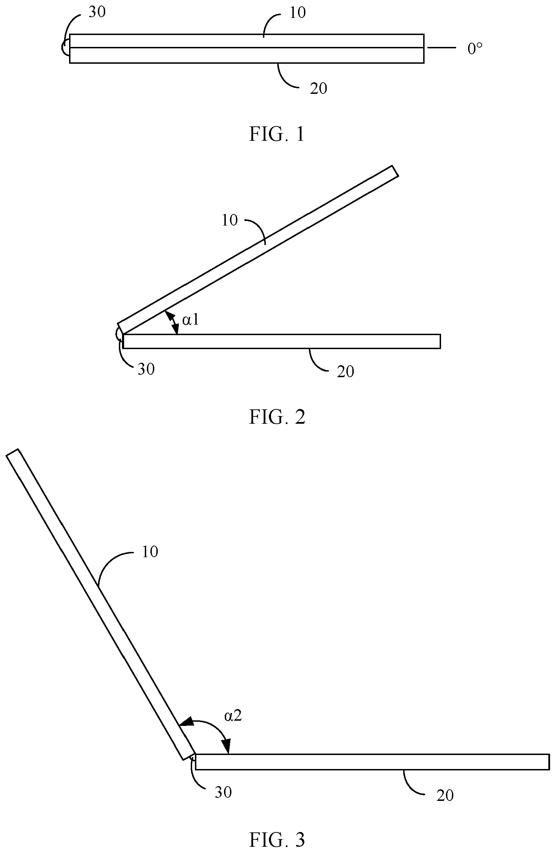

This application provides a foldable electronic device. The foldable electronic device has a foldable function, and includes an electronic device, for example, a foldable mobile phone or a notebook computer. A foldable electronic device shown in FIG. 1 to FIG. 3 includes a first body 10 (for example, a screen of a notebook computer), a second body 20 (for example, a keyboard base of the notebook computer), and a hinge structure 30 disposed between the first body 10 and the second body 20. One end of the hinge structure 30 is connected to the first body 10, and the other end of the hinge structure 30 is connected to the second body 20. The first body 10 may be rotated around the hinge structure 30 relative to the second body 20. Under a connection action of the hinge structure 30, the first body 10 and the second body 20 may present a change from a folded state to an unfolded state, as shown in FIG. 1 to FIG. 3. The first body 10 and the second body 20 may be in the folded state (as shown in FIG. 1, an included angle between the first body 10 and the second body 20 is 0°). When the first body 10 is rotated around the hinge structure 30 relative to the second body 20, the first body 10 and the second body 20 may be in the unfolded state (as shown in FIG. 2 and FIG. 3, included angles between the first body 10 and the second body 20 are both greater than 0°, and the included angle α1 shown in FIG. 2 between the first body 10 and the second body 20 is less than the included angle α2 between the first body 10 and the second body 20 shown in FIG. 3). It may be understood that the included angle between the first body 10 and the second body 20 is greater than or equal to 0° (where a pre-tightening angle of the hinge structure 30 when the first body 10 is folded relative to the second body 20 is ignored), and a maximum value of the included angle between the first body 10 and the second body 20 is less than or equal to 360°. Certainly, for different foldable electronic devices, the included angle between the first body 10 and the second body 20 may have different maximum values in product design.

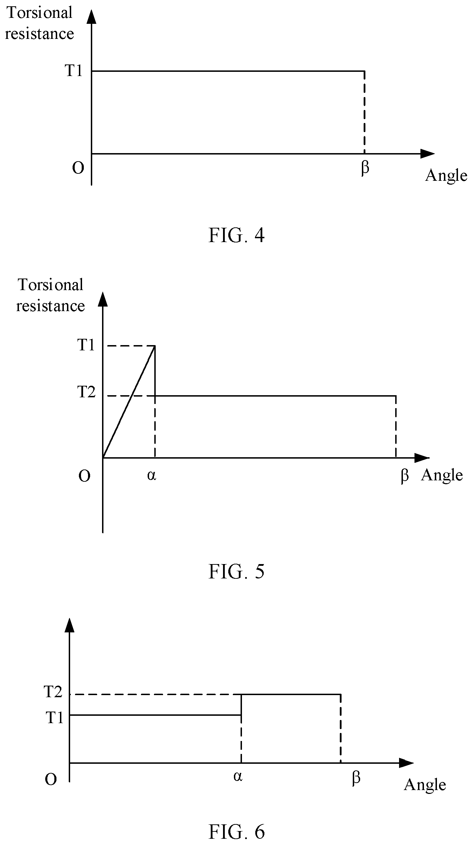

A notebook computer is used as an example. An existing hinge structure includes a rotating shaft and a shaft sleeve. Torque is generated when the rotating shaft is frictionally rotated relative to the shaft sleeve, in a process in which a screen is unfolded relative to a keyboard base until an included angle between the screen and the keyboard base is β, a curve of the torque is shown in FIG. 4 (where a pre-tightening angle between the rotating shaft and the shaft sleeve when the screen is folded relative to the keyboard base is ignored).

In another hinge structure, a washer is disposed between a rotating shaft and a shaft sleeve. When the rotating shaft is rotated relative to the shaft sleeve, torque is generated due to friction between the rotating shaft and the washer and between the shaft sleeve and the washer. This hinge structure has a self-locking angle α. In a process in which the screen is gradually unfolded relative to the keyboard base, when an angle between the screen and the keyboard base is less than the self-locking angle α, the torque increases as the angle increases. When an angle by which the screen is unfolded relative to the keyboard base exceeds the self-locking angle α, the torque remains constant. In a process from folding to unfolding the screen relative to the keyboard base, a curve diagram of torque generated by the hinge structure is shown in FIG. 5 (where a pre-tightening angle between the rotating shaft, the shaft sleeve, and the hinge structure when the screen is folded relative to the keyboard base is ignored).

It can be learned that none of the hinge structures described above can meet both a user's requirement on convenience of one-hand unfolding and a requirement on working stability of the foldable electronic device in the unfolded state.

Based on the foregoing application scenario, a hinge structure 30 provided in embodiments of this application can output different torque in a process from the folded state (the included angle being 0° between the first body 10 and the second body 20 shown in FIG. 1) to the unfolded state (the included angle greater than 0° between the first body 10 and the second body 20 shown in FIG. 2 or FIG. 3) of the first body 10 relative to the second body 20, to meet requirements of the first body 10 and the second body 20 on torque in different states.

Specifically, refer to FIG. 6. FIG. 6 shows changes in torque output by the hinge structure 30 in a process in which the first body 10 is unfolded relative to the second body 20 of the foldable electronic device provided in this application from the folded state to a maximum included angle between the first body 10 and the second body 20. In FIG. 6, a vertical coordinate represents a value of the torque generated by the hinge structure 30, and an origin O of a horizontal coordinate represents the folded state of the first body 10 relative to the second body 20. When the included angle between the first body 10 and the second body 20 is less than or equal to a first angle, and the first angle is set to α (for example, α is 60°), a range of the first angle is greater than 0° and less than or equal to α. In the range of the first angle, first torque T1 generated by the hinge structure 30 is small, and the first body 10 can be unfolded relative to the second body 20 as long as a user applies small force. Therefore, the foldable electronic device can be unfolded with one hand. When the included angle between the first body 10 and the second body 20 is greater than the first angle and less than a second angle, the second angle herein is the maximum included angle between the first body 10 and the second body 20, and the second angle is set to β (for example, β is 150°), an angle range greater than the first angle and less than the second angle is greater than β-α and less than or equal to β. In this angle range, the hinge structure 30 outputs second torque T2 greater than the first torque T1, to maintain the unfolded state between the first body 10 and the second body 20, so as to facilitate operation and use. For example, the user may operate the notebook computer when unfolding the notebook computer.

The following describes in detail a specific implementation of the hinge structure 30 provided in this application. Certainly, terms used in the following embodiments are merely intended to describe specific embodiments, but are not intended to limit this application. Terms "a", "the", "the foregoing", and "this" of singular forms used in this specification and the appended claims of this application are also intended to include expressions such as "one or more", unless otherwise specified in the context clearly.

In addition, reference to "an embodiment", "some embodiments", or the like described in this specification indicates that one or more embodiments of this application include a specific feature, structure, or characteristic described with reference to the embodiment. Therefore, statements "in an embodiment", "in some embodiments", "in some other embodiments", "in other embodiments", and the like that appear at different places do not necessarily mean referring to a same embodiment, instead, the statements mean referring to "one or more but not all of the embodiments", unless otherwise specifically emphasized in other ways. Terms "include", "comprise", "have", and variants of the terms all mean "include but are not limited to", unless otherwise specifically emphasized in other ways.

### Embodiment 1

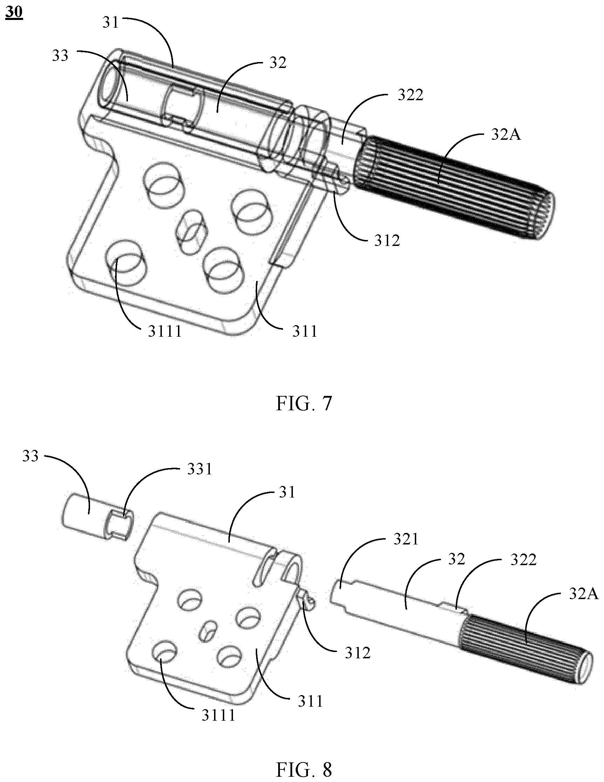

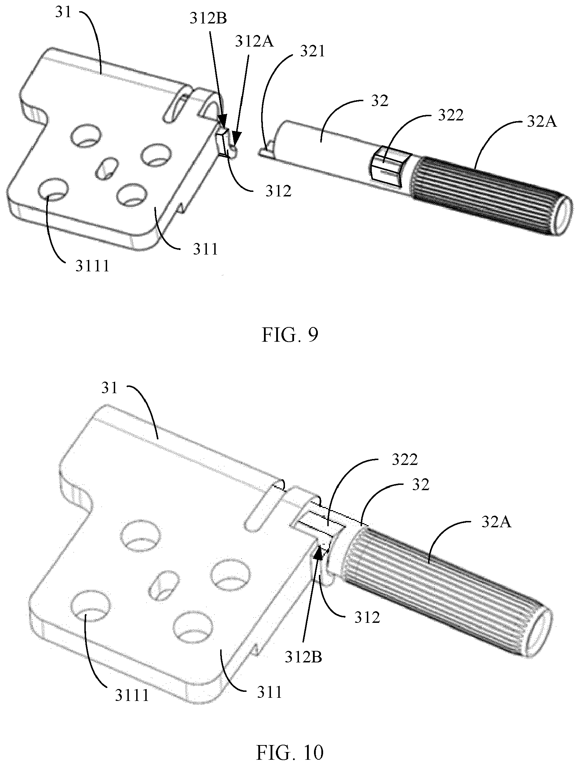

With reference to FIG. 7, an embodiment of this application provides a hinge structure 30, including a shaft sleeve 31, a first rotating shaft 32, and a second rotating shaft 33. It is set that the shaft sleeve 31 may be configured to connect to the first body 10, and the first rotating shaft 32 may be configured to connect to the second body 20. FIG. 7 herein shows, in a perspective manner, a structure in which the hinge structure 30 is installed. FIG. 8 is a schematic exploded view of an installation structure of the shaft sleeve 31, the first rotating shaft 32, and the second rotating shaft 33 in this embodiment. One end of the first rotating shaft 32 stretches into the shaft sleeve 31, and the first rotating shaft 32 may be rotated around an axis of the first rotating shaft 32 relative to the shaft sleeve 31. When the first rotating shaft 32 is rotated relative to the shaft sleeve 31, the first rotating shaft 32 frictionally fits the shaft sleeve 31 to form a first articulated pair. The first rotating shaft 32 and the shaft sleeve 31 may have an interference fit structure, and friction occurs between the first rotating shaft 32 and the shaft sleeve 31 when the first rotating shaft 32 is rotated relative to the shaft sleeve 31. The entire hinge structure outputs first torque (where the first torque herein limits only that the torque is generated due to frictional rotation of the first rotating shaft 32 relative to the shaft sleeve 31, and does not limit magnitude of the torque). The second rotating shaft 33 is installed in the shaft sleeve 31 and may be rotated around an axis of the second rotating shaft 33 relative to the shaft sleeve 31. When the second rotating shaft 33 is rotated relative to the shaft sleeve 31, the second rotating shaft 33 frictionally fits the shaft sleeve 31 to form a second articulated pair. Third torque is generated due to friction between the second rotating shaft 33 and the shaft sleeve 31 when the second rotating shaft 33 is rotated relative to the shaft sleeve 31. In addition, as shown in FIG. 7 or FIG. 8, a stopping block 312 is disposed on the shaft sleeve 31, and a stopping member 322 is disposed on the first rotating shaft 32. Specifically, as shown in FIG. 9, the stopping block 312 has a first side 312A and a second side 312B. When the first rotating shaft 32 is rotated relative to the shaft sleeve 31, the stopping block 312 limits rotation of the stopping member 322 to implement a rotation range of the first rotating shaft 32 relative to the shaft sleeve 31. In addition, to limit a rotation angle of the first rotating shaft 32 relative to the second rotating shaft 33, FIG. 8 shows a position-limiting mechanism that is disposed between the first rotating shaft 32 and the second rotating shaft 33 and that includes a position-limiting member 331 and a rotating member 321 that match each other. For example, the position-limiting member 331 is disposed on the second rotating shaft 33, and the rotating member 321 is disposed on the first rotating shaft 32. It may be understood that the position-limiting member 331 and the rotating member 321 in the foregoing structure match each other, and positions at which the position-limiting member 331 and the rotating member 321 are disposed may be exchanged with each other. The position-limiting member 331 is disposed on the first rotating shaft 32, and the rotating member 321 is disposed on the second rotating shaft 33.

In addition, in a schematic diagram of the perspective structure of the hinge structure shown in FIG. 7, a part that is of the first rotating shaft 32 and that is butted to the second rotating shaft 33 is covered in the shaft sleeve 31. The shaft sleeve 31 is integrally provided with a connecting plate 311, and installation holes 3111 are formed on the connecting plate 311, and may be configured to connect to the first body 10. A shaft end 32A that is of the first rotating shaft 32 and that is away from the second rotating shaft 33 is exposed outside the shaft sleeve 31, and tooth space is formed on the shaft end 32A, and may be configured to connect to the second body 20. The second rotating shaft 33 is only configured to bear an action of rotating, under driving of the first rotating shaft 32, relative to the shaft sleeve 31 to generate the third torque. Therefore, one end that is of the second rotating shaft 33 and that is away from the first rotating shaft 32 is enclosed in the shaft sleeve 31. Certainly, the second rotating shaft 33 may alternatively be exposed outside the shaft sleeve 31, provided that the foregoing function can be implemented.

The following uses "the position-limiting member 331 is disposed on the second rotating shaft 33, and the rotating member 321 is disposed on the first rotating shaft 32" as an example to describe in detail the hinge structure 30 in this embodiment.

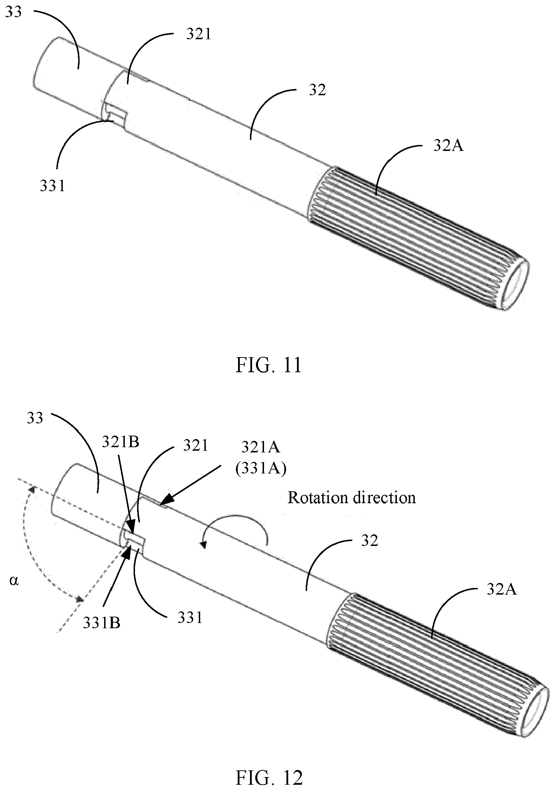

For example, as shown in FIG. 8, the convex position-limiting member 331 is formed at one end that is of the second rotating shaft 33 and that faces the first rotating shaft 32, and an avoidance notch is formed on the position-limiting member 331. The convex rotating member 321 is formed at one end that is of the first rotating shaft 32 and that faces the second rotating shaft 33, and the rotating member 321 and the position-limiting member 331 can match each other (as shown in FIG. 11, after the first rotating shaft 32 is butted to the second rotating shaft 33, the rotating member 321 and the position-limiting member 331 match each other). The avoidance notch on the position-limiting member 331 forms rotation space position-limiting the rotating member 321 to being rotated within the range of the first angle. When the first rotating shaft 32 is rotated around the axis of the first rotating shaft 32 relative to the second rotating shaft 33, the rotating member 321 is rotated in the rotation space formed by the avoidance notch on the position-limiting member 331.

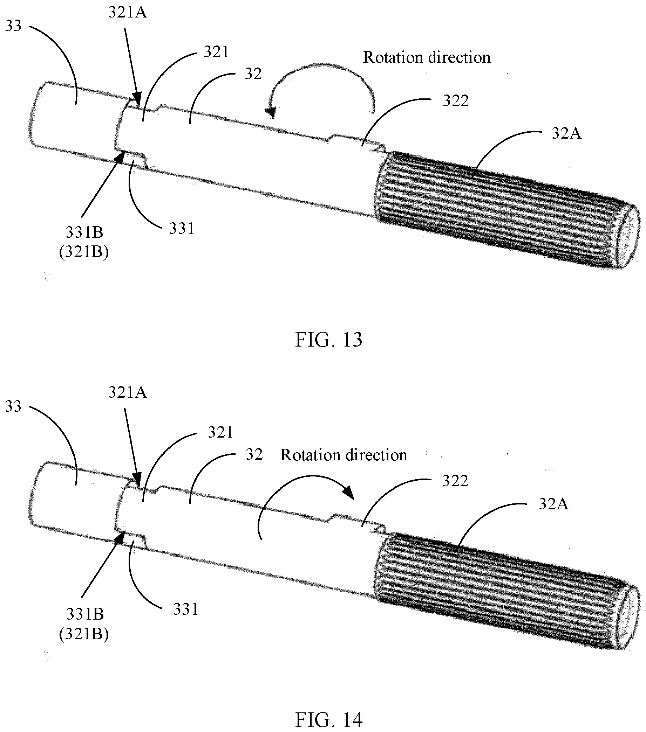

A working process of the hinge structure 30 corresponds to a process in which the foldable electronic device provided in this application changes from a folded state to an unfolded state (namely, a process in which the included angle between the first body 10 and the second body 20 continuously and gradually increases). When the first body 10 and the second body 20 are folded, that is, the included angle between the first body 10 and the second body 20 is 0°, as shown in FIG. 12, a fitting relationship between the first rotating shaft 32 and the second rotating shaft 33 is that a first side 321A of the rotating member 321 is in contact with a first side 331A of the position-limiting member 331. An included angle between a second side 321B of the rotating member 321 and a second side 331B of the position-limiting member 331 is the first angle α. When the first body 10 is gradually unfolded relative to the second body 20 until the included angle between the first body 10 and the second body 20 is α, that is, the rotating member 321 is rotated around a direction of an axis of the rotating member 321 in a rotation direction shown in FIG. 12 from the contact between the first side 321A of the rotating member 321 and the first side 331A of the position-limiting member 331 (in this case, a contact state between the rotating member and the position-limiting member is shown in FIG. 11) until the second side 321B of the rotating member 321 is in contact with the second side 331B of the position-limiting member 331 (in this case, a contact state between the rotating member 321 and the position-limiting member 331 is shown in FIG. 13), a rotation angle of the rotating member 321 is the first angle α. In this process, first torque is generated only due to rotational friction between the first rotating shaft 32 and the shaft sleeve 31. The second rotating shaft 33 is stationary to the shaft sleeve 31 in this process, and no torque is output between the second rotating shaft 33 and the shaft sleeve 31.

When the first body 10 continues to be rotated relative to the second body 20 until the included angle between the first body 10 and the second body 20 is the maximum included angle β, the first rotating shaft 32 is rotated in a rotation direction shown in FIG. 13. Because the rotating member 321 fits the position-limiting member 331 in a state shown in FIG. 13 (where the second side 321B of the rotating member 321 is in contact with the second side 331B of the position-limiting member 331), as the first rotating shaft 32 is rotated, the rotating member 321 pushes the position-limiting member 331 to coaxially rotate (because the first rotating shaft 32 and the second rotating shaft 33 are disposed in the shaft sleeve 31 in a manner of coaxial rotation), so that the second rotating shaft 33 is rotated around the axis of the second rotating shaft 33 relative to the shaft sleeve 31. In this process, the first rotating shaft 32 and the second rotating shaft 33 are stationary to each other, first torque is generated due to rotational friction between the first rotating shaft 32 and the shaft sleeve 31, and third torque is generated due to rotational friction between the second rotating shaft 33 and the shaft sleeve 31. A sum of the first torque and the third torque is the second torque, and torque output by the entire hinge structure 30 is the second torque. It should be noted that the first torque in this motion process may be the same as or different from the first torque in the process in which the first body 10 is rotated relative to the second body 20 from 0° to the first angle α, provided that a value of the second torque that is the sum of the first torque and the third torque in this process is greater than a value of the first torque.

In an entire process in which the first body 10 is unfolded relative to the second body 20 from the folded state to a state of the maximum included angle, the stopping member 322 is rotated from being in contact with the first side 312A of the stopping block 312 (not shown in the figure) until the stopping member 322 is in contact with the second side 312B of the stopping block 312 (as shown in FIG. 10). To be specific, fitting between the stopping member 322 and the stopping block 312 limits the maximum value of the included angle between the first body 10 and the second body 20.

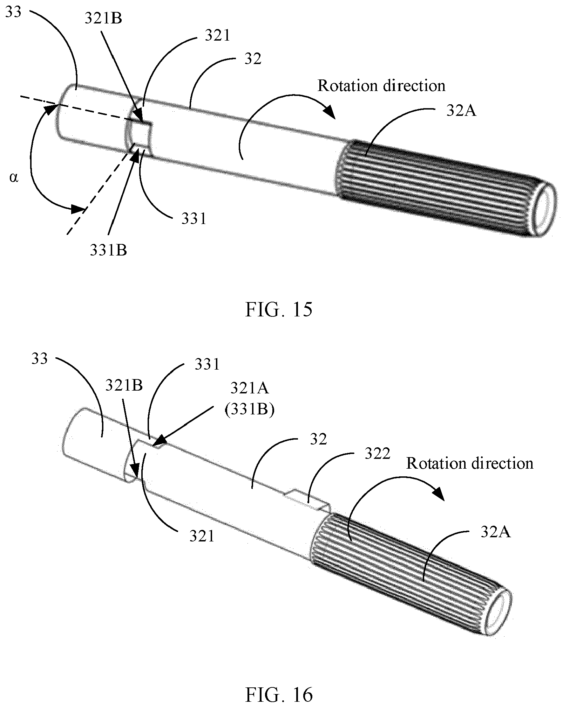

It should be noted that, in the hinge structure 30 provided in this embodiment, in a process in which the foldable electronic device is gradually folded from the unfolded state (the included angle greater than 0° between the first body 10 and the second body 20 shown in FIG. 2 or FIG. 3) to the folded state (the included angle being 0° between the first body 10 and the second body 20 shown in FIG. 1) (a process in which the included angle between the first body 10 and the second body 20 continuously and gradually decreases), a working process of the hinge structure 30 is as follows. As shown in FIG. 14, when the included angle between the first body 10 and the second body 20 is the maximum included angle β, a fitting relationship between the first rotating shaft 32 and the second rotating shaft 33 is that the second side 321B of the rotating member 321 is in contact with the second side 331B of the position-limiting member 331. An included angle between the first side 321A of the rotating member 321 and the first side 331A of the position-limiting member 331 is the first angle α. As the first rotating shaft 32 is rotated relative to the second rotating shaft 33 in a rotation direction shown in the figure until the included angle between the first body 10 and the second body 20 is β-α, the rotating member 321 is rotated by the first angle α until the first side 321A of the rotating member 321 is in contact with the first side 331A of the position-limiting member 331. FIG. 15 shows that the included angle between the second side 321B of the rotating member 321 and the second side 331B of the position-limiting member 331 being α is equivalent to a rotation angle of the rotating member 321 relative to the position-limiting member 331. FIG. 16 shows a state in which the first side 321A of the rotating member 321 is in contact with the first side 331A of the position-limiting member 331. In this process, first torque is generated due to rotational friction between the first rotating shaft 32 and the shaft sleeve 31. The second rotating shaft 33 is stationary to the shaft sleeve 31 in this process, and no torque is output between the second rotating shaft 33 and the shaft sleeve 31. When the first body 10 continues to be rotated relative to the second body 20 until the first body 10 and the second body 20 are folded, that is, the included angle between the first body 10 and the second body 20 is 0°, the first rotating shaft 32 continues to be rotated in the foregoing rotation direction. Because the rotating member 321 fits the position-limiting member 331 in the state shown in FIG. 16 (where the first side 321A of the rotating member 321 is in contact with the first side 331A of the position-limiting member 331), as the first rotating shaft 32 is rotated, the rotating member 321 pushes the position-limiting member 331 to coaxially rotate (because the first rotating shaft 32 and the second rotating shaft 33 are disposed in the shaft sleeve 31 in the manner of coaxial rotation), so that the second rotating shaft 33 is rotated around the axis of the second rotating shaft 33 relative to the shaft sleeve 31. In this process, the first rotating shaft 32 and the second rotating shaft 33 are stationary to each other, first torque is generated due to rotational friction between the first rotating shaft 32 and the shaft sleeve 31, and third torque is generated due to rotational friction between the second rotating shaft 33 and the shaft sleeve 31. A sum of the first torque and the third torque is the second torque, and torque output by the entire hinge structure 30 is the second torque greater than the first torque.

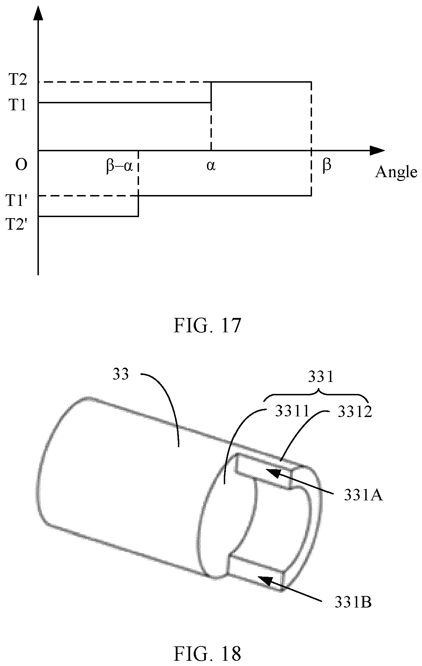

It should be noted that during reverse rotation of the first body 10 relative to the second body 20, a torque output state of the hinge structure 30 provided in this embodiment is the same as a torque output state during forward rotation. A diagram of a torque state change shown in FIG. 17 may be obtained by comparing the torque output state with that during the forward rotation. A horizontal coordinate represents the included angle between the first body 10 and the second body 20, and a vertical coordinate represents a value of torque generated by the hinge structure 30. In the process in which the first body 10 is unfolded relative to the second body 20 of the foldable electronic device from the folded state to the maximum included angle between the first body 10 and the second body 20, a change curve of torque generated by the hinge structure 30 is shown by a line above the horizontal coordinate. A change curve of torque generated by the hinge structure 30 in the process in which the first body 10 is folded relative to the second body 20 from the maximum included angle to the folded state is shown by a line below the horizontal coordinate. It is set that an origin O of the horizontal coordinate is the folded state of the first body 10 relative to the second body 20 (where the pre-tightening angle of the hinge structure 30 when the first body is folded relative to the second body is ignored), that is, the included angle between the first body 10 and the second body 20 is 0°. A coordinate α on the horizontal coordinate is the first angle between the first body 10 and the second body 20, and a coordinate β is the maximum included angle between the first body 10 and the second body 20. In a process in which the included angle between the first body 10 and the second body 20 gradually increases from 0° at the origin O to the first angle α, first torque generated by the hinge structure 30 corresponds to a value T1 on the vertical coordinate. In a process in which the included angle between the first body 10 and the second body 20 continues to increase from α to the maximum angle β, second torque generated by the hinge structure 30 corresponds to a value T2 on the vertical coordinate. In a process in which the included angle between the first body 10 and the second body 20 gradually decreases from the maximum angle β to β-α, first torque generated by the hinge structure 30 corresponds to a value T1' on the vertical coordinate. In a process in which the included angle between the first body 10 and the second body 20 gradually decreases from β-α to 0°, second torque generated by the hinge structure 30 corresponds to a value T2' on the vertical coordinate. Herein, absolute values of T1 and T1' are equal and directions of T1 and T1' are opposite, and absolute values of T2 and T2' are equal and directions of T2 and T2' are opposite. In this manner, it is set that first torque output by the first articulated pair is constant, and third torque output by the second articulated pair is also constant.

Specific structures of the position-limiting member 331 and the rotating member 321 may be implemented in a plurality of manners, provided that the foregoing working process can be implemented. "The position-limiting member 331 is disposed on the second rotating shaft 33" is used as an example. The specific structure of the position-limiting member 331 may have at least the following several example structures for description.

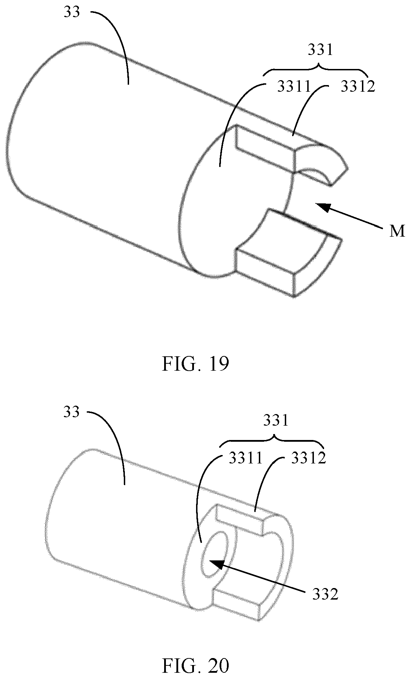

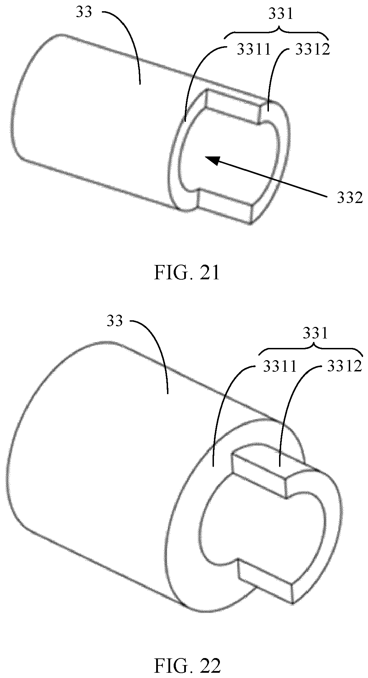

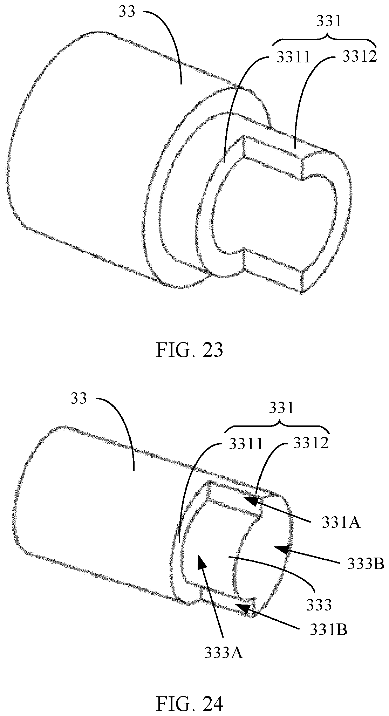

Example 1: As shown in FIG. 18, the position-limiting member 331 includes a connection end face 3311 formed by an end face that is of the second rotating shaft 33, that faces one side of the first rotating shaft 32, and that is perpendicular to the axis of the second rotating shaft 33, and a position-limiting boss 3312 formed on the connection end face 3311 in a direction in which the connection end face faces the first rotating shaft 32. The position-limiting boss 3312 extends along a peripheral face of the second rotating shaft 33, and a cross section that is of the position-limiting boss 3312 and that is parallel to the connection end face 3311 is arc-shaped, so that an outer wall of the position-limiting boss 3312 and an outer periphery of the second rotating shaft 33 have a same curved face. Herein, the avoidance notch configured to fit the rotating member is formed among end faces of two ends of the position-limiting boss 3312 that extend along the peripheral face of the second rotating shaft 33 and the connection end face 3311. In a process in which the first rotating shaft 32 is rotated relative to the second rotating shaft 33, the rotating member 321 disposed on the first rotating shaft 32 is rotated from contact between the rotating member 321 (where a fitting relationship between the first rotating shaft 32 and the rotating member 321 is not shown in FIG. 18) and a first end face of the position-limiting boss 3312 (namely, the first side 331A of the position-limiting member 331 shown in FIG. 18) until the rotating member 321 is in contact with a second end face of the position-limiting boss 3312 (namely, the second side 331B of the position-limiting member 331 shown in FIG. 18), and the rotation angle of the first rotating shaft 32 relative to the second rotating shaft 33 is the first angle α. In this structure, if a gap M is formed between end faces of two ends of the position-limiting boss 3312 in a peripheral direction of the second rotating shaft 33 that discontinuously extend, a structure of a position-limiting member 331 shown in FIG. 19 is obtained. Based on the structure of the position-limiting member 331 shown in FIG. 18, if the first rotating shaft 32 rotationally fits the second rotating shaft 33 by using a shaft hole and the second rotating shaft 33 has a rotating hole 332, a structure of a position-limiting member 331 shown in FIG. 20 is obtained. Based on the structure of the position-limiting member 331 shown in FIG. 20, when an inner wall of the rotating hole 332 and an inner wall of the position-limiting boss 3312 have a same curved face, a structure of a position-limiting member 331 shown in FIG. 21 is obtained. Based on the structure of the position-limiting member 331 shown in FIG. 21, when an outer diameter of the second rotating shaft 33 is greater than an outer diameter of the position-limiting boss 3312, a structure of a position-limiting member 331 shown in FIG. 22 is obtained. Based on the structure of the position-limiting member 331 shown in FIG. 22, when the connection end face 3311 is independent of the side that is of the second rotating shaft 33 and that faces the first rotating shaft 32 and an outer diameter of the connection end face 3311 is the same as the outer diameter of the position-limiting boss 3312, a structure of a position-limiting member 331 shown in FIG. 23 is obtained.

Based on the structure of the position-limiting member 331 shown in Example 1, the position-limiting member 331 may further have another variant structure.

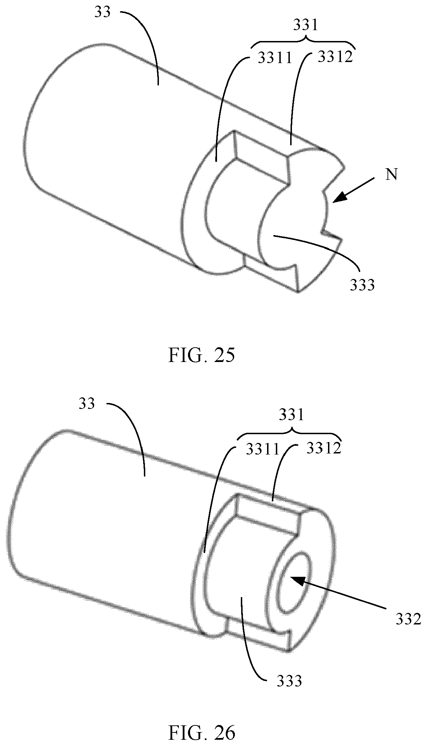

For example, in Variation 1 shown in FIG. 24, a cylinder 333 integrally formed with the position-limiting boss 3312 is disposed on one side that is of the connection end face 3311 and that faces the first rotating shaft 32. The avoidance notch is formed among the end faces of the two ends of the position-limiting boss 3312 that extend along the peripheral face of the second rotating shaft 33 (namely, the first side 331A and the second side 331B of the position-limiting member 331 shown in FIG. 24), the connection end face 3311, and an outer peripheral face 333A of the cylinder 333. An end face 333B that is of the cylinder 333 and that is perpendicular to a direction of an axis of the cylinder 333 is flush with an end face of the position-limiting boss 3312. Based on the structure shown in FIG. 24, if a gap N is formed between the end faces of the two ends of the position-limiting boss 3312 in the peripheral direction of the second rotating shaft 33 that discontinuously extend, a structure of a position-limiting member 331 shown in FIG. 25 is obtained. Based on Variation 1 shown in FIG. 24, if the first rotating shaft 32 rotationally fits the second rotating shaft 33 by using the shaft hole and the second rotating shaft 33 has the rotating hole 332, a structure of a position-limiting member 331 shown in FIG. 26 is obtained.

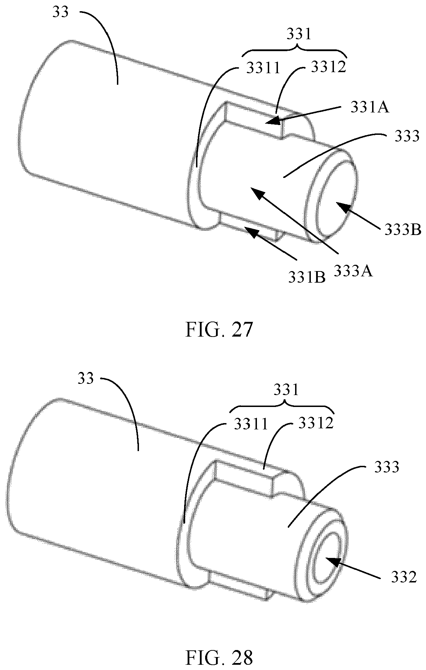

For example, in Variation 2 shown in FIG. 27, the cylinder 333 is disposed on the side that is of the connection end face 3311 and that faces the first rotating shaft 32. An outer diameter of the cylinder 333 matches an inner diameter of the position-limiting boss 3312, and the cylinder 333 protrudes from the position-limiting boss 3312 along the axis of the second rotating shaft 33 in a direction away from the second rotating shaft 33. The avoidance notch is formed among the end faces of the two ends of the position-limiting boss 3312 that extend along the peripheral face of the second rotating shaft 33 (namely, the first side 331A and the second side 331B of the position-limiting member 331 shown in FIG. 27), the connection end face 3311, and an outer periphery of the cylinder 333. Based on that shown in FIG. 27, if the first rotating shaft 32 rotationally fits the second rotating shaft 33 by using the shaft hole and the second rotating shaft 33 has the rotating hole 332, a structure of a position-limiting member 331 shown in FIG. 28 is obtained.

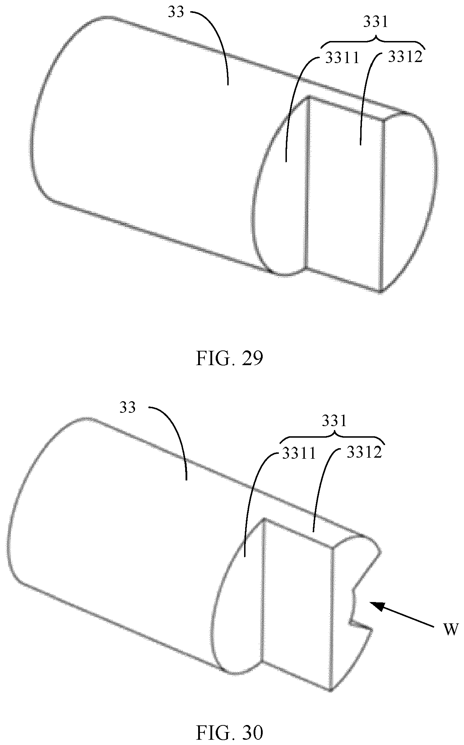

For example, in Variation 3 shown in FIG. 29, the cross section that is of the position-limiting boss 3312 and that is parallel to the connection end face 3311 is fan-shaped, and the avoidance notch is formed between the position-limiting boss 3312 and the connection end face 3311. Based on the mechanism shown in FIG. 29, if the position-limiting boss 3312 discontinuously extends, and a gap W is formed in the peripheral direction of the second rotating shaft 33, a structure of a position-limiting member 331 shown in FIG. 30 is obtained.

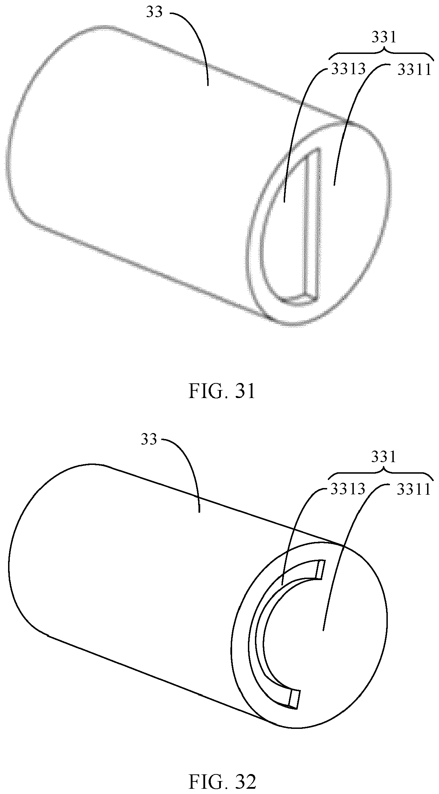

Example 2: As shown in FIG. 31, the position-limiting member 331 includes a connection end face 3311 formed by an end face that is of the second rotating shaft 33, that faces one side of the first rotating shaft 32, and that is perpendicular to the axis of the second rotating shaft 33, and a position-limiting groove 3313 formed on the connection end face, and the position-limiting groove 3313 forms the avoidance notch. It may be understood that the convex rotating member 321 (not shown in the figure) is formed at the end that is of the first rotating shaft 32 and that faces the second rotating shaft 33, and the rotating member 321 and the position-limiting groove 3313 can match each other. A section that is of the position-limiting groove 3313 and that is parallel to the connection end face 3311 is fan-shaped (as shown in FIG. 31) or arc-shaped (as shown in FIG. 32), to limit the rotation space in which the rotating member 321 is rotated in the range of the first angle. When the first rotating shaft 32 is rotated around the axis of the first rotating shaft 32 relative to the second rotating shaft 33, the rotating member 321 is rotated in the rotation space formed by the avoidance notch on the position-limiting member 331. In a process in which the first rotating shaft 32 is rotated relative to the second rotating shaft 33, the rotating member 321 disposed on the first rotating shaft 32 is rotated from contact between the rotating member 321 (where a fitting relationship between the first rotating shaft 32 and the rotating member 321 is not shown in the figure) and a first end 3313A of the position-limiting groove 3313 until the rotating member is in contact with a second end 3313B of the position-limiting groove 3313 (as shown in FIG. 32), and the rotation angle of the first rotating shaft 32 relative to the second rotating shaft 33 is the first angle α.

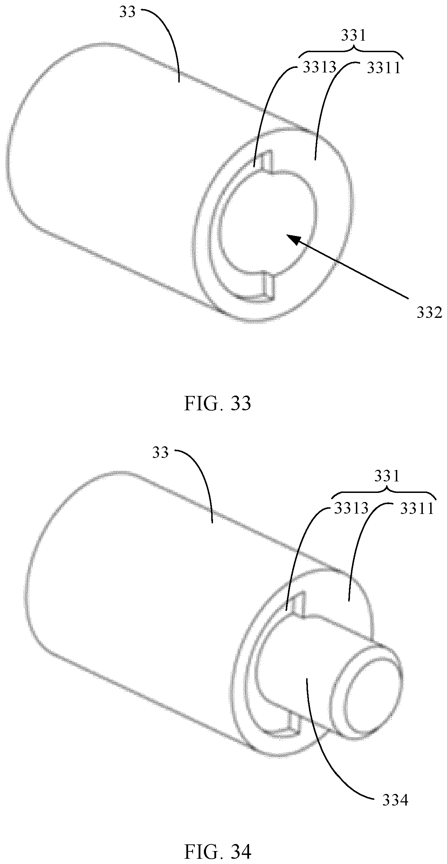

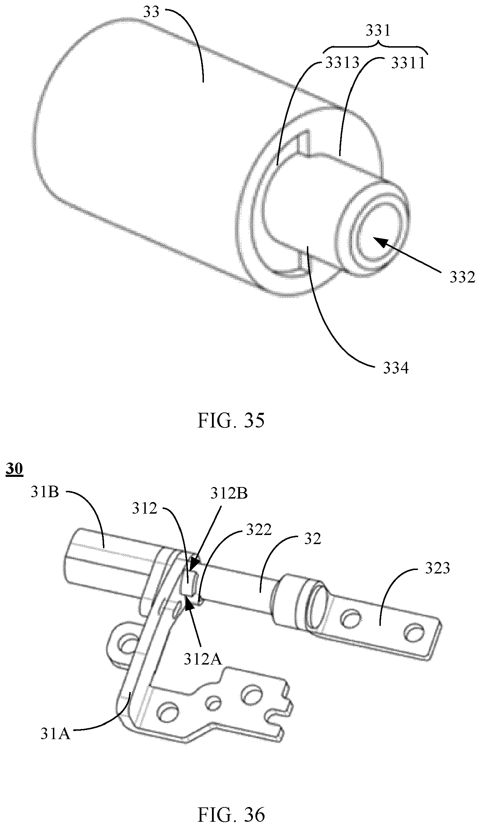

Based on the structure of the position-limiting member 331 shown in FIG. 32, if the first rotating shaft 32 rotationally fits the second rotating shaft 33 by using a shaft hole, and the second rotating shaft 33 has a rotating hole 332, a structure of a position-limiting member 331 shown in FIG. 33 is obtained. Based on the structure of the position-limiting member 331 shown in FIG. 32, if the first rotating shaft 32 rotationally fits the second rotating shaft 33 by using a shaft hole, and the second rotating shaft 33 has a rotating shaft 334, a structure of a position-limiting member 331 shown in FIG. 34 is obtained. Based on the structure of the position-limiting member 331 shown in FIG. 34, when a rotating hole 332 is further disposed on the rotating shaft 334, a structure of a position-limiting member 331 shown in FIG. 35 is obtained.

A working principle and the working process of the hinge structure 30 that has any position-limiting mechanism provided in this example when the hinge structure 30 is used in the process in which the foldable electronic device changes from the folded state to the unfolded state (namely, the process in which the included angle between the first body 10 and the second body 20 gradually and continuously increases) are similar to those in Example 1. Details are not described herein again.

### Embodiment 2

Based on Embodiment 1, the shaft sleeve 31 is split into two parts. A first shaft sleeve 31A and a second shaft sleeve 31B are obtained by varying the shaft sleeve 31 shown in FIG. 36 to FIG. 38. The first shaft sleeve 31A is provided with the connecting plate 311, and the connecting plate 311 may be configured to connect to the first body 10. There may be no corresponding connection relationship between the first shaft sleeve 31A and the second shaft sleeve 31B, provided that the first shaft sleeve 31A and the second shaft sleeve 31B are stationary to each other. In addition, to limit a maximum rotation angle of the first rotating shaft 32 relative to the first shaft sleeve 31A to being β, as shown in FIG. 36, the stopping block 312 is disposed on the first shaft sleeve 31A, and the stopping member 322 is disposed on the first rotating shaft 32. Specifically, as shown in FIG. 36, the stopping block 312 has the first side 312A and the second side 312B. When the first rotating shaft 32 is rotated relative to the first shaft sleeve 31A, the stopping block 312 limits the rotation of the stopping member 322 to implement the rotation range of the first rotating shaft 32 relative to the first shaft sleeve 31A. Correspondingly, in a rotation state of the first body 10 relative to the second body 20 of the foldable electronic device, in the process from the folded state to the unfolded state of the first body 10 relative to the second body 20, the stopping member 322 is rotated from being in contact with the first side 312A of the stopping block 312 (a fitting state shown in FIG. 36) until the stopping member 322 is in contact with the second side 312B of the stopping block 312. The first rotating shaft 32 is articulated to the first shaft sleeve 31A to form the first articulated pair. The second rotating shaft 33 is articulated to the second shaft sleeve 31B to form the second articulated pair (not shown in FIG. 36). The first rotating shaft 32 and the first shaft sleeve 31A may have an interference fit structure, and the first torque is generated due to friction between the first rotating shaft 32 and the first shaft sleeve 31A when the first rotating shaft 32 is rotated relative to the first shaft sleeve 31A. To facilitate a connection between the first rotating shaft 32 and the second body 20, a connecting piece 323 may further be disposed on the first rotating shaft 32, and the connecting piece 323 may be configured to connect to the second body 20, as shown in FIG. 36. Whether the connecting piece 323 is movable or fastened to the first rotating shaft 32 needs to be set based on a specific actual requirement.

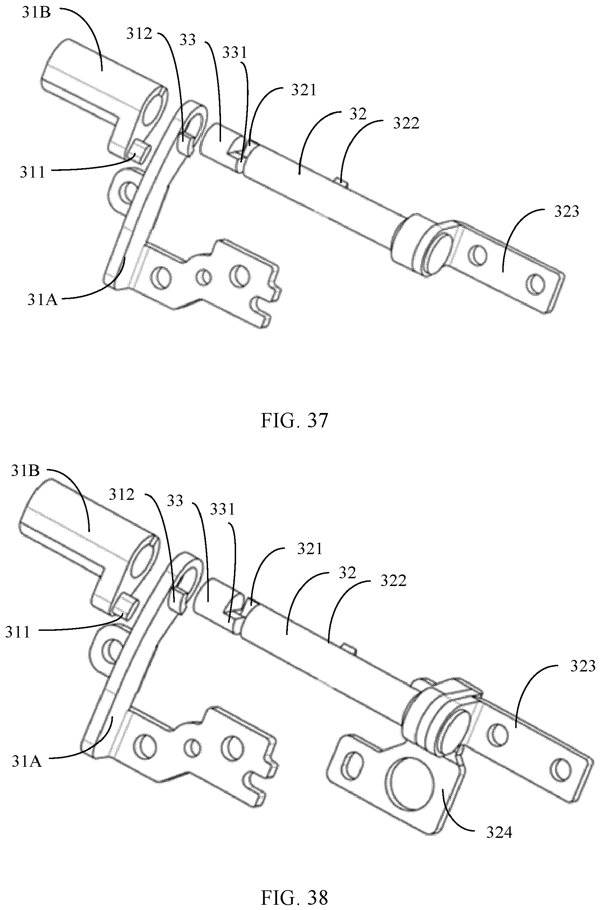

FIG. 37 shows an exploded view of a hinge structure 30 in FIG. 36 that is split. FIG. 37 shows fitting structures between the first rotating shaft 32 and the first shaft sleeve 31A, between the second rotating shaft 33 and the second shaft sleeve 31B, and between the first rotating shaft 32 and the second rotating shaft 33. It can be seen that a protrusion 311 is formed on one side that is of the second shaft sleeve 31B and that faces the first shaft sleeve 31A, to fit and be connected to the first shaft sleeve 31A. The first articulated pair is formed between the first shaft sleeve 31A and the first rotating shaft 32, and the second articulated pair is formed between the second shaft sleeve 31B and the second rotating shaft 33. The rotating member 321 is disposed at the end that is of the first rotating shaft 32 and that faces the second rotating shaft 33, and the position-limiting member 331 is disposed at the end that is of the second rotating shaft 33 and that faces the first rotating shaft 32. Specifically, the structures of the position-limiting member 331 and the rotating member 321 and a principle of relative motion between the first rotating shaft 32 and the second rotating shaft 33 are described in Embodiment 1. Details are not described herein again.

Based on the hinge structure 30 shown in FIG. 37, another connecting structure may further be disposed on the first rotating shaft 32. For example, in an exploded view of the hinge structure 30 shown in FIG. 38, an installation plate 324 is disposed on the first rotating shaft 32. Certainly, similar to the connecting piece 323, whether the installation plate 324 is movable or fastened to the first rotating shaft 32 needs to be set based on a specific actual requirement.

### Embodiment 3

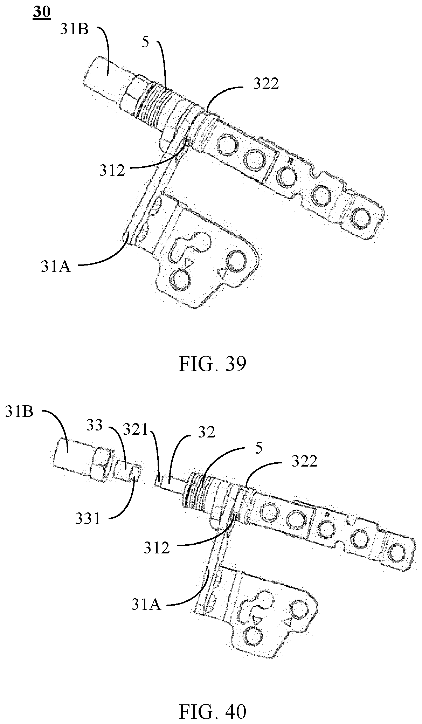

A hinge structure provided in this embodiment is a variation of the structure in Embodiment 2. Different from that in Embodiment 2, as shown in FIG. 39 and FIG. 40, the first rotating shaft 32 and the first shaft sleeve 31A in this embodiment may have a rotational friction-free fitting relationship, and a friction washer 5 that can generate friction when the first rotating shaft 32 is rotated relative to the shaft sleeve 31 is added between the first rotating shaft 32 and the shaft sleeve 31. When the first rotating shaft 32 is rotated relative to the first shaft sleeve 31A, friction occurs between the first rotating shaft 32 the friction washer 5, friction occurs between the friction washer 5 and the first shaft sleeve 31A, and the first rotating shaft 32, the friction washer 5, and the first shaft sleeve 31A jointly output the first torque.

Another structure in this embodiment is similar to the structure in Embodiment 2. Details are not described herein again.

### Embodiment 4

This embodiment is a variation of the structure in Embodiment 2. Similarly, the first articulated pair and the second articulated pair are formed between the first body 10 and the second body 20. Different from that in Embodiment 2, there is no corresponding fitting relationship between the first rotating shaft 32 and the second rotating shaft 33.

Because there is no corresponding fitting relationship between the first rotating shaft 32 and the second rotating shaft 33, the first articulated pair does not affect motion of the second articulated pair. Therefore, the second articulated pair needs to implement the following torque output in the process in which the foldable electronic device changes from the folded state to the unfolded state: When the included angle between the first body 10 and the second body 20 is less than or equal to the first angle α, the second rotating shaft 33 frictionlessly and rotationally fits the second shaft sleeve 31A, and no torque is output between the second rotating shaft 33 and the second shaft sleeve 31A. When the included angle between the first body 10 and the second body 20 is greater than the first angle α and less than the second angle β, the second rotating shaft 33 and the second shaft sleeve 31B frictionally and rotationally fit each other, and the third torque is generated between the second rotating shaft 33 and the second shaft sleeve 31B.

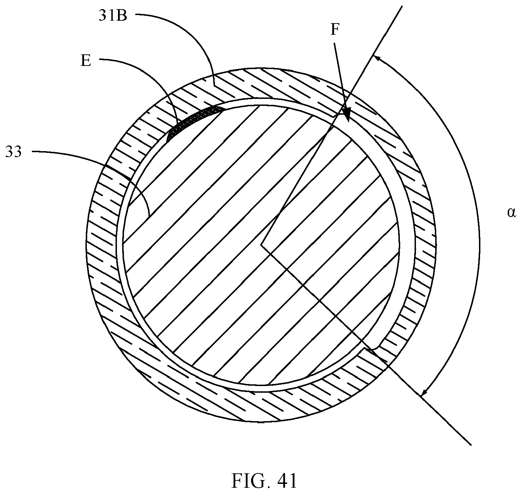

FIG. 41 shows an example structure. FIG. 41 is a schematic diagram of a sectional structure in which the second articulated pair is perpendicular to the axis of the second rotating shaft 33. The second rotating shaft 33 is basically cylindrical, and a friction part E protruding from an outer peripheral face of the second rotating shaft 33 is disposed at a place on the peripheral face of the second rotating shaft 33. In addition, a groove area F that can accommodate the friction part E is disposed in a shaft hole of the second shaft sleeve 31B, and an angle corresponding to the groove area F in a direction encircling a center line of the shaft hole of the second shaft sleeve 31B is the first angle α. When the friction part E of the second rotating shaft 33 is in interference fit with a non-groove area of the second shaft sleeve 31B, the third torque is generated due to rotational friction between the friction part E and the non-groove area. When the friction part E of the second rotating shaft 33 fits the groove area F of the second shaft sleeve 31B, no friction is generated and no torque is output between the friction part E and the groove area F.

The following provides example description for a working process of the hinge structure 30 in this embodiment with reference to the foregoing structures of the first articulated pair and the second articulated pair.

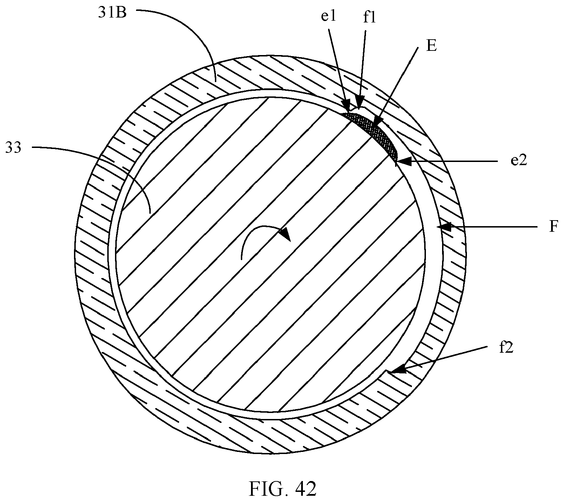

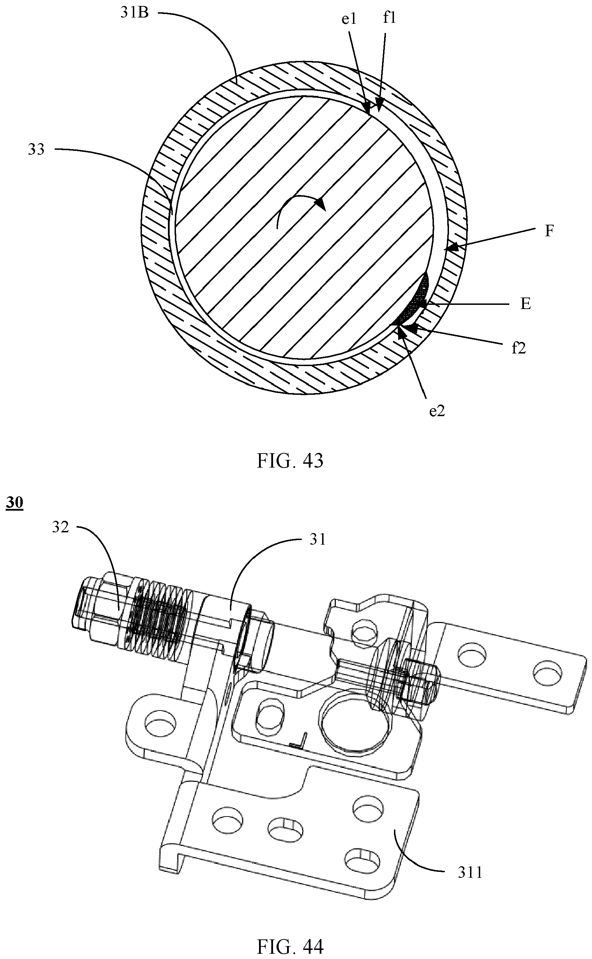

In the first articulated pair, the first rotating shaft 32 is connected to the first body 10, the first shaft sleeve 31A is connected to the second body 20, and the first rotating shaft 32 and the first shaft sleeve 31A rotationally and frictionally fit each other. In the second articulated pair, the second rotating shaft 33 is connected to the first body 10, and the second shaft sleeve 31B is connected to the second body 20. A working process of the hinge structure 30 corresponds to the process in which the foldable electronic device provided in this application changes from the folded state to the unfolded state (namely, a process in which the included angle between the first body 10 and the second body 20 continuously and gradually increases). Initially, the first body 10 and the second body 20 are folded, that is, the included angle between the first body 10 and the second body 20 is 0°. The first rotating shaft 32 and the first shaft sleeve 31A normally frictionally fit each other by using the shaft hole (where a fitting structure of the first rotating shaft 32 and the first shaft sleeve 31A is the same as that in Embodiment 1, and description is not provided herein again with reference to an accompanying drawing). The friction part E of the second rotating shaft 33 is located in the groove area F of the second shaft sleeve 31B, and a first side e1 of the friction part E is in contact with a first side f1 of the groove area F, as shown in FIG. 42. As the first body 10 is gradually unfolded relative to the second body 20 until the included angle between the first body 10 and the second body 20 is the first angle α, the first torque is generated due to continuous rotational friction between the first rotating shaft 32 and the first shaft sleeve 31A. The second rotating shaft 33 is rotated relative to the second shaft sleeve 31B in a rotation direction shown in FIG. 43. The friction part E is moved in the groove area F of the second shaft sleeve 31B until a second side e2 of the friction part E is in contact with a second side f2 of the groove area F, as shown in FIG. 43. A rotation angle of the second rotating shaft 33 relative to the second shaft sleeve 31B is the first angle α. The first body 10 continues to be rotated relative to the second body 20 in the rotation direction shown in the figure until the included angle between the first body 10 and the second body 20 is the maximum value β, and the first torque is generated due to continuous rotational friction between the first rotating shaft 32 and the second shaft sleeve 31B. The friction part E of the second rotating shaft 33 is moved out of the groove area F of the second shaft sleeve 31B. The third torque is generated when the friction part E frictionally fits the shaft hole of the second shaft sleeve 31B. The first torque generated by the first hinge pair and the third torque generated by the second hinge pair are combined, and torque output by the entire hinge structure 30 is the second torque.

### Embodiment 5

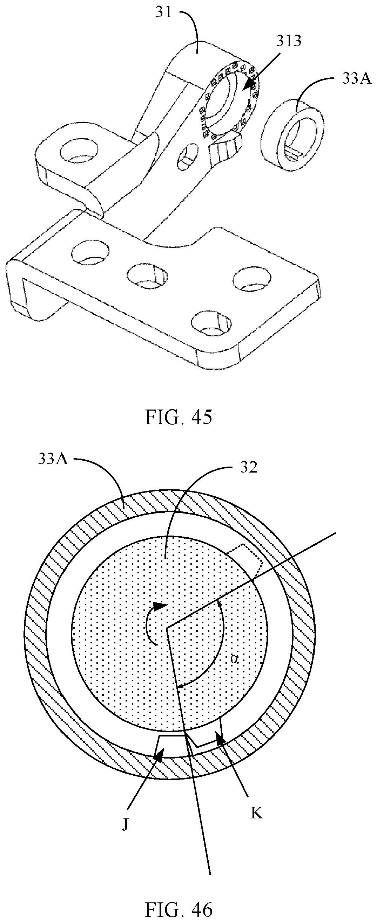

This embodiment is a variation of the structure in Embodiment 1. As shown in FIG. 44, similarly, the first articulated pair and the second articulated pair are formed between the first body 10 and the second body 20, and as described in Embodiment 1, the first rotating shaft 32 and the shaft sleeve 31 frictionally fit each other. When the first rotating shaft 32 is rotated around the axis of the first rotating shaft 32 relative to the shaft sleeve 31, the first articulated pair including the first rotating shaft 32 and the shaft sleeve 31 generates the first torque. Details are not described herein again. A difference from Embodiment 1 lies in fitting relationships between the second rotating shaft 33 and the shaft sleeve 31 and between the second rotating shaft 33 and the first rotating shaft 32. FIG. 44 does not show a fitting structure between the second rotating shaft 33, the shaft sleeve 31, and the first rotating shaft 32. A structure shown in FIG. 45 is obtained by expanding a structure of the second rotating shaft 33 and the shaft sleeve 31. The second rotating shaft 33 has a sleeve ring 33A of an integrated structure (where herein, the second rotating shaft 33 may alternatively become a sleeve ring 3 3 A through varying). The second rotating shaft 33 is omitted in FIG. 45. A ring wall 313 configured to frictionally fit an outer periphery of the sleeve ring 33A is formed on an inner wall of the shaft sleeve 31. When the sleeve ring 33A is rotated around an axis of the sleeve ring 33A of the second rotating shaft relative to the ring wall 313 of the shaft sleeve 31, the third torque is generated between the sleeve ring 33A and the ring wall 313 of the shaft sleeve 31.

For the rotation of the first rotating shaft 32 relative to the second rotating shaft 33, refer to FIG. 46 based on the structure shown in FIG. 45. The sleeve ring 33A of the second rotating shaft 33 may be sleeved on the first rotating shaft 32 and in clearance fit with the first rotating shaft 32, so that the first rotating shaft 32 can be frictionlessly rotated relative to the sleeve ring 33 A. A first protrusion J is formed on an inner wall of the sleeve ring 33A, a second protrusion K is formed on an outer peripheral face of the first rotating shaft 32, and the first protrusion J is configured to fit the second protrusion K to together limit a rotation angle of the first rotating shaft 32 relative to the sleeve ring 33 A.

A working process of the hinge structure 30 corresponds to the process in which the foldable electronic device provided in this application changes from the folded state to the unfolded state (namely, a process in which the included angle between the first body 10 and the second body 20 continuously and gradually increases). Refer to FIG. 46. When the first body 10 and the second body 20 are folded, that is, the included angle between the first body 10 and the second body 20 is 0°, the second protrusion K on the first rotating shaft 32 is at a position shown by a diagram constituted by dashed lines. When the first body 10 is gradually unfolded relative to the second body 20 until the included angle between the first body 10 and the second body 20 is α, the first rotating shaft 32 is rotated relative to the sleeve ring 33A in a rotation direction shown in FIG. 46 until the second protrusion K is in contact with the first protrusion J. In this case, the rotation angle of the first rotating shaft 32 relative to the sleeve ring 33A is the first angle α. When the first rotating shaft 32 continues to be rotated relative to the sleeve ring 33A in the rotation direction shown in FIG. 46 to the maximum included angle β, the first rotating shaft 32 pushes the sleeve ring 33A due to the fitting between the second protrusion K and the first protrusion J to rotate (which is equivalent to pushing the second rotating shaft 33 to rotate), so that the sleeve ring 33A is rotated relative to the shaft sleeve 31. When the sleeve ring 33A is rotated relative to the shaft sleeve 31, the third torque is generated due to friction between the sleeve ring 33A and the ring wall 313 of the shaft sleeve 31.

It should be noted that, in this embodiment, a position of the first protrusion J on the sleeve ring 33A and the position of the second protrusion K on the first rotating shaft 32 are not limited. However, when the first rotating shaft 32 and the second rotating shaft 33 are installed, when an electronic product is in a folded state, an included angle between the first protrusion J on the sleeve ring 33A of the second rotating shaft 33 and the second protrusion K on the first rotating shaft 32 relative to the axis of the first rotating shaft 32 needs to be the first angle α.

### First comparative example

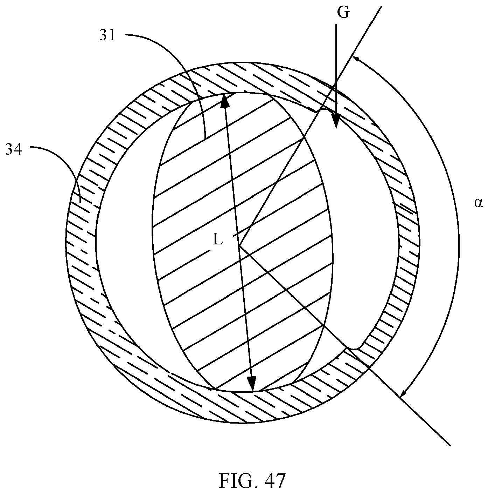

This first example provides a hinge structure 30 that is different from those implemented in the foregoing five embodiments. Torque generated by the hinge structure 30 varies with the included angle between the first body 10 and the second body 20. Specifically, the hinge structure 30 shown in FIG. 47 includes a shaft sleeve 31 and a rotating shaft 34 that are articulated. Herein, the shaft sleeve 31 may be configured to connect to the first body 10 (for example, a screen of a notebook computer) of the foldable device, and the rotating shaft 34 may be configured to connect to the second body 20 of the foldable device.

As shown in FIG. 47, a cross section of a shaft hole of the shaft sleeve 31 is basically circular, a groove area G recessed in a direction away from an axis of the shaft hole is disposed on an inner wall of the shaft hole, and an angle corresponding to the groove area G in a direction encircling the axis of the shaft hole is the first angle α. Correspondingly, the rotating shaft 34 has a radial long end perpendicular to a cross section in a direction of an axis of the rotating shaft 34 (where a length from a free end of the radial long end to the axis of the rotating shaft 34 is L shown in FIG. 47). A radial length of the radial long end is greater than an inner diameter of the groove area G of the shaft sleeve 31. It may be understood that, when the rotating shaft 34 stretches into the shaft hole of the shaft sleeve 31, regardless of whether the radial long end of the cross section of the rotating shaft 34 is in contact with an inner wall or the groove area G of the shaft sleeve 31, the rotating shaft 34 is in interference fit with the shaft sleeve 31. However, torque generated between the rotating shaft 34 and the shaft sleeve 31 when the radial long end of the rotating shaft 34 is in contact with the shaft hole of the shaft sleeve 31 and is rotated is less than torque generated between the rotating shaft 34 and the shaft sleeve 31 when the radial long end of the rotating shaft 34 is in contact with the groove area G and is rotated. It is set that the former is first torque, and the latter is second torque. When the rotating shaft 34 is rotated relative to the shaft sleeve 31, the rotating shaft 34 and the shaft sleeve 31 implement two torque output states.

"The rotating shaft 34 is connected to the first body 10, and the shaft sleeve 31 is connected to the second body 20" is used as an example. A working process of the hinge structure 30 corresponds to a process of continuous rotation of the first body 10 relative to the second body 20 in this application (namely, a process in which the included angle between the first body 10 and the second body 20 gradually increases from 0° to the maximum included angle). It may be predicted that the radial long end of the rotating shaft 34 is located in the groove area G, and as the first body 10 is gradually unfolded relative to the second body 20 until the included angle between the first body 10 and the second body 20 is the first angle α, the rotating shaft 34 is continuously rotated relative to the shaft sleeve 31 and the first torque is generated due to friction between the rotating shaft 34 and the shaft sleeve 31. In a process in which the first body 10 continues to be rotated relative to the second body 20 in a rotation direction shown in the figure until the included angle between the first body 10 and the second body 20 is the maximum value β, the radial long end of the rotating shaft 34 is moved out of the groove area G of the shaft hole of the shaft sleeve 31. The second torque is generated when the radial long end frictionally fits the shaft hole of the shaft sleeve 31.

### Second comparative example

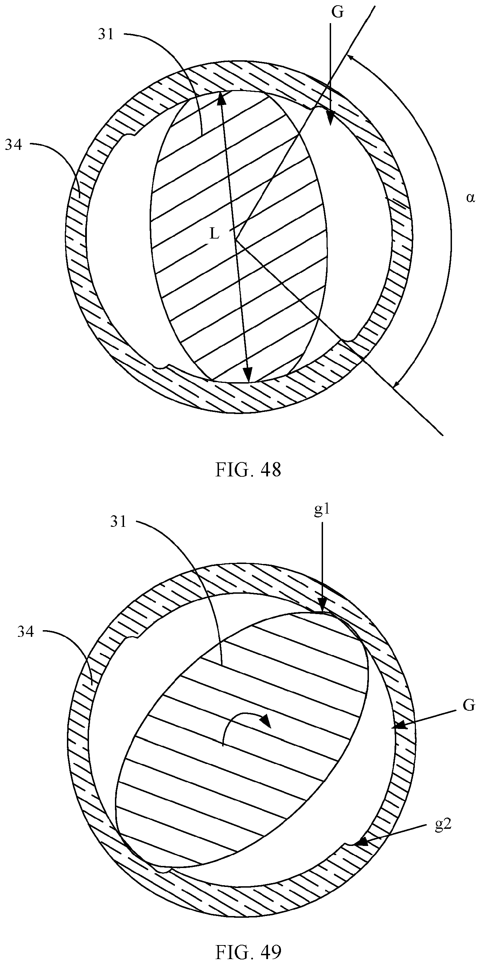

Based on the first example, this second example provides an implementable hinge structure. As shown in FIG. 48, two groove areas G recessed in the direction away from the axis of the shaft hole are symmetrically disposed on the inner wall of the shaft hole, and an angle corresponding to each groove area G in the direction encircling the axis of the shaft hole is the first angle α. The following provides example description for a working process of the hinge structure 30 in this example with reference to the hinge structure 30 shown in FIG. 48.

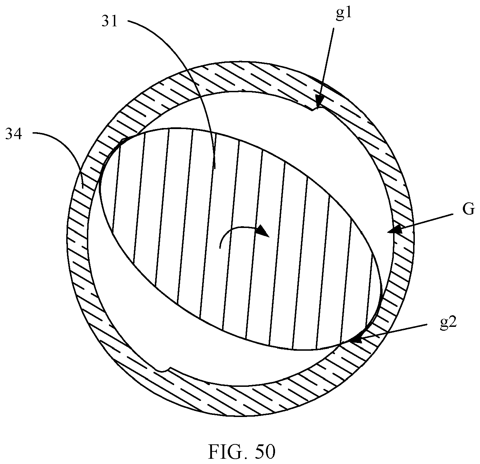

"The rotating shaft 34 is connected to the first body 10, and the shaft sleeve 31 is connected to the second body 20" is used as an example. The working process of the hinge structure 30 corresponds to the process of the continuous rotation of the first body 10 relative to the second body 20 in this application (namely, a process in which the included angle between the first body 10 and the second body 20 gradually increases from 0° to the maximum included angle). Initially, the first body 10 and the second body 20 are folded, that is, the included angle between the first body 10 and the second body 20 is 0°. The radial long end of the rotating shaft 34 is located in the groove areas G and is in contact with first sides g1 of the groove areas G, as shown in FIG, 49. As the first body 10 is gradually unfolded relative to the second body 20 until the included angle between the first body 10 and the second body 20 is the first angle α, the rotating shaft 34 is continuously rotated relative to the shaft sleeve 31 and the first torque is generated due to the friction between the rotating shaft 34 and the shaft sleeve 31. The radial long end of the rotating shaft 34 is moved from the first sides g1 (as shown in FIG. 49) of the groove areas G of the shaft hole of the shaft sleeve 31 until the radial long end is in contact with second sides g2 of the groove areas G (as shown in FIG. 50). A rotation angle of the rotating shaft 34 relative to the shaft sleeve 31 is the first angle α. In a process in which the first body 10 continues to be rotated relative to the second body 20 in a rotation direction shown in the figure until the included angle between the first body 10 and the second body 20 is the maximum value β, the radial long end of the rotating shaft 34 is moved out of the groove areas G of the shaft hole of the shaft sleeve 31. The second torque is generated when the radial long end frictionally fits the shaft hole of the shaft sleeve 31 (a fitting state shown in FIG. 48).

The foregoing five implementations of the hinge structures 30 are merely examples for description, and can all output different torques for different unfolding angles in a process of unfolding the foldable electronic device, to provide convenience for the user and improve use experience. When the first body 10 and the second body 20 are folded, the hinge structures 30 provided in Embodiment 1, Embodiment 2, and Embodiment 3 can also provide the same torque as that in a torque state change when the first body 10 and the second body 20 are unfolded. However, in Embodiment 4 and Embodiment 5, a torque being the same as that in a status in Embodiment 1 or Embodiment 2 can be output only when the first body 10 is unfolded relative to the second body 20. In addition, the hinge structures 30 provided in the foregoing five embodiments and the first comparative example can be used in a process in which the first body 10 and the second body 20 are unfolded within an included angle range from 0 to 360°. However, the hinge structure 30 provided in the second comparative example can be used only in a process in which the first body 10 and the second body 20 are unfolded within an included angle range from 0° to 180°.

In conclusion, when the hinge structure 30 provided in embodiments of this application is used in the foldable electronic device, the foldable electronic device can be easily unfolded with one hand, and stability of the foldable electronic device in the unfolded state can be ensured. The hinge structure does not affect actual use when providing convenience, and has a good application prospect.

### Thrid comparative example

A hinge structure, used in the foldable electronic device, includes a shaft sleeve and a rotating shaft stretching into the shaft sleeve. The shaft sleeve is configured to connect to the first body of the foldable electronic device, and the rotating shaft is configured to connect to the second body of the foldable electronic device.

A groove area is disposed in the shaft sleeve, and an angle corresponding to the groove area in a direction encircling an axis of the shaft sleeve is the first angle. A radial long end is disposed on the rotating shaft in a direction perpendicular to an axis of the rotating shaft, and a length of the radial long end from the axis of the rotating shaft to a free end is greater than a radius of the groove area.

In the process in which the foldable electronic device changes from the folded state to the unfolded state:
when the included angle between the first body and the second body is less than or equal to the first angle, the rotating shaft is rotated relative to the shaft sleeve, the radial long end of the rotating shaft frictionally fits the groove area of the shaft sleeve, and the hinge structure generates first torque; or
when the included angle between the first body and the second body is greater than the first angle and less than the second angle, the rotating shaft is rotated relative to the shaft sleeve, the radial long end of the rotating shaft frictionally fits the shaft sleeve, and the hinge structure generates second torque.

The second torque is greater than the first torque.

## Claims

1. A hinge structure (30), used in a foldable electronic device and comprising a shaft sleeve (31), a first rotating shaft (32), and a second rotating shaft (33), wherein the shaft sleeve (31) is configured to connect to a first body (10) of the foldable electronic device, and the first rotating shaft (32) is configured to connect to a second body (20) of the foldable electronic device;
the first rotating shaft (32) stretches into the shaft sleeve (31) and may be rotated around an axis of the first rotating shaft (32) relative to the shaft sleeve (31), and the first rotating shaft (32) frictionally fits the shaft sleeve (31) when being rotated;
the second rotating shaft (33) stretches into the shaft sleeve (31) and may be rotated around an axis of the second rotating shaft (33) relative to the shaft sleeve (31), and the second rotating shaft (33) fits the shaft sleeve (31) when being rotated; and
in a process in which the foldable electronic device changes from a folded state to an unfolded state,
when an included angle between the first body (10) and the second body (20) is less than or equal to a first angle (α), the hinge structure (30) outputs first torque (T1);
when an included angle between the first body (10) and the second body (20) is greater than a first angle (α) and less than a second angle (β), the hinge structure (30) outputs second torque (T2), wherein
the first angle (α) is less than the second angle (β), and the second torque (T2) is greater than the first torque (T1);
wherein the first torque (T1) is generated due to frictional rotation of the first rotating shaft (32) relative to the shaft sleeve (31);
when an included angle between the first body (10) and the second body (20) is greater than a first angle (α) and less than a second angle (β), the hinge structure (30) outputs third torque, wherein the third torque is generated due to rotational friction between the second rotating shaft (33) and shaft sleeve (31); and
wherein the second torque (T2) is the sum of first torque (T1) and third torque;
wherein the first rotating shaft (32) may further be rotated around the axis of the first rotating shaft (32) relative to the second rotating shaft (33), and a position-limiting mechanism is disposed between the second rotating shaft (33) and the first rotating shaft (32), wherein the position-limiting mechanism is configured to limit a rotation angle of the first rotating shaft (32) relative to the second rotating shaft (33) to being less than the first angle (α); and
when the included angle between the first body (10) and the second body (20) is less than or equal to the first angle (α), the first rotating shaft (32) is rotated relative to the shaft sleeve (31), and the second rotating shaft (33) is stationary to the shaft sleeve (31);
when the included angle between the first body (10) and the second body (20) is greater than the first angle (α) and less than the second angle (β), the first rotating shaft (32) is rotated relative to the shaft sleeve (31) and the first rotating shaft (32) drives the second rotating shaft (33) to rotate relative to the shaft sleeve (31);
wherein the first rotating shaft (32) and the second rotating shaft (33) are disposed opposite to each other, the position-limiting mechanism comprises a position-limiting member (331) and a rotating member (321), the position-limiting member (331) is disposed on one of the second rotating shaft (33) and the first rotating shaft (32), and the rotating member (321) is disposed on the other of the second rotating shaft (33) and the first rotating shaft (32); and
an avoidance notch configured to fit the rotating member (321) is formed at one end that is of the position-limiting member (331) and that faces the rotating member (321), to limit the rotation angle of the first rotating shaft (32) relative to the second rotating shaft (33) to being less than or equal to the first angle (α).

2. The hinge structure (30) according to claim 1, wherein the position-limiting member (331) comprises a connection end face (3311) and a position-limiting boss (3312) that protrudes from the connection end face (3311) toward the rotating member (321), and the connection end face (3311) is perpendicular to a rotating axis of the rotating member (321); and
the avoidance notch is formed between the position-limiting boss (3312) and the connection end face (3311).

3. The hinge structure (30) according to claim 2, wherein a section that is of the position-limiting boss (3312) and that is parallel to the connection end face (3311) is fan-shaped or arc-shaped.

4. The hinge structure (30) according to claim 2, wherein the position-limiting boss (3312) has a gap.

5. The hinge structure (30) according to claim 2, wherein an outer diameter of the position-limiting boss (3312) is less than an outer diameter of the connection end face (3311) to form a shaft shoulder; or
an outer diameter of the connection end face (3311) is less than an outer diameter of the second rotating shaft (33) to form a shaft shoulder.

6. The hinge structure (30) according to claim 1, wherein the position-limiting member (331) comprises a connection end face (3311) and a position-limiting groove (3313) formed on the connection end face (3311), and the connection end face (3311) is perpendicular to a rotation axis of the rotating member (321); and
the position-limiting groove (3313) forms the avoidance notch.

7. The hinge structure (30) according to claim 6, wherein a section that is of the position-limiting groove (3313) and that is parallel to the connection end face (3311) is fan-shaped or arc-shaped.

8. The hinge structure (30) according to claim 1, wherein the first rotating shaft (32) rotationally fits the second rotating shaft (33) through a shaft hole.

9. The hinge structure (30) according to claim 1, wherein the second rotating shaft (33) has a sleeve ring (33A), and the sleeve ring (33A) is sleeved on the first rotating shaft (32); and
the position-limiting mechanism comprises a first protrusion (J) formed on an inner wall of the sleeve ring (33A) and a second protrusion (K) that is formed on an outer wall of the first rotating shaft (32) and that is configured to fit the first protrusion (J).

10. The hinge structure (30) according to claim 1, wherein the shaft sleeve (31) comprises a first shaft sleeve (31A) and a second shaft sleeve (31B) that are stationary to each other;
the first rotating shaft (32) stretches into the first shaft sleeve (31A) and may be rotated around the axis of the first rotating shaft (32) relative to the first shaft sleeve (31A), and the first rotating shaft (32) frictionally fits the first shaft sleeve (31A) when being rotated; and
the second rotating shaft (33) stretches into the second shaft sleeve (31B) and may be rotated around the axis of the second rotating shaft (33) relative to the second shaft sleeve (31B), and the second rotating shaft (33) frictionally fits the second shaft sleeve (31B) when being rotated.

11. The hinge structure (30) according to claim 10, wherein a friction washer (5) is further disposed between the first rotating shaft (32) and the first shaft sleeve (31A), and/or a friction washer (5) is further disposed between the second rotating shaft (33) and the second shaft sleeve (31B).

12. The hinge structure (30) according to any one of claims 1 to 11, wherein a stopping block (312) is disposed on the shaft sleeve (31), a stopping member (322) is disposed on the first rotating shaft (32), and the stopping member (322) is configured to work with the stopping block (312), to limit a maximum angle (β) at which the first body (10) is unfolded relative to the second body (20).

13. A foldable electronic device, comprising a first body (10), a second body (20), and the hinge structure (30) according to any one of claims 1 to 12.

## Patentansprüche

1. Scharnierstruktur (30), die in einer klappbaren elektronischen Vorrichtung verwendet wird und eine Wellenhülse (31), eine erste Drehwelle (32) und eine zweite Drehwelle (33) umfasst, wobei die Wellenhülse (31) dazu konfiguriert ist, mit einem ersten Körper (10) der klappbaren elektronischen Vorrichtung verbunden zu werden, und die erste Drehwelle (32) dazu konfiguriert ist, mit einem zweiten Körper (20) der klappbaren elektronischen Vorrichtung verbunden zu werden;
die erste Drehwelle (32) in die Wellenhülse (31) hineinragt und um eine Achse der ersten Drehwelle (32) relativ zu der Wellenhülse (31) gedreht werden kann und die erste Drehwelle (32) reibschlüssig in die Wellenhülse (31) passt, wenn sie gedreht wird;
die zweite Drehwelle (33) in die Wellenhülse (31) hineinragt und um eine Achse der zweiten Drehwelle (33) relativ zu der Wellenhülse (31) gedreht werden kann und die zweite Drehwelle (33) in die Wellenhülse (31) passt, wenn sie gedreht wird; und in einem Prozess, bei dem die klappbare elektronische Vorrichtung von einem eingeklappten Zustand in einen ausgeklappten Zustand wechselt,
wenn ein eingeschlossener Winkel zwischen dem ersten Körper (10) und dem zweiten Körper (20) kleiner oder gleich einem ersten Winkel (α) ist, die Scharnierstruktur (30) ein erstes Drehmoment (T1) erzeugt;
wenn ein eingeschlossener Winkel zwischen dem ersten Körper (10) und dem zweiten Körper (20) größer als ein erster Winkel (α) und kleiner als ein zweiter Winkel (β) ist, die Scharnierstruktur (30) ein zweites Drehmoment (T2) erzeugt, wobei
der erste Winkel (α) kleiner als der zweite Winkel (β) ist und das zweite Drehmoment (T2) größer als das erste Drehmoment (T1) ist;
wobei das erste Drehmoment (T1) durch Reibungsrotation der ersten Drehwelle (32) relativ zu der Wellenhülse (31) generiert wird;
wenn ein eingeschlossener Winkel zwischen dem ersten Körper (10) und dem zweiten Körper (20) größer als ein erster Winkel (α) und kleiner als ein zweiter Winkel (β) ist, die Scharnierstruktur (30) ein drittes Drehmoment erzeugt, wobei das dritte Drehmoment durch Rotationsreibung zwischen der zweiten Drehwelle (33) und der Wellenhülse (31) generiert wird; und
wobei das zweite Drehmoment (T2) die Summe aus dem ersten Drehmoment (T1) und dem dritten Drehmoment ist;
wobei die erste Drehwelle (32) ferner um die Achse der ersten Drehwelle (32) relativ zu der zweiten Drehwelle (33) gedreht werden kann, und ein Positionsbegrenzungsmechanismus zwischen der zweiten Drehwelle (33) und der ersten Drehwelle (32) angeordnet ist, wobei der Positionsbegrenzungsmechanismus dazu konfiguriert ist, einen Drehwinkel der ersten Drehwelle (32) relativ zu der zweiten Drehwelle (33) derart zu begrenzen, dass er kleiner als der erste Winkel (α) ist; und
wenn der eingeschlossene Winkel zwischen dem ersten Körper (10) und dem zweiten Körper (20) kleiner oder gleich dem ersten Winkel (α) ist, die erste Drehwelle (32) relativ zu der Wellenhülse (31) gedreht wird und die zweite Drehwelle (33) gegenüber der Wellenhülse (31) feststehend ist;
wenn der eingeschlossene Winkel zwischen dem ersten Körper (10) und dem zweiten Körper (20) größer als der erste Winkel (α) und kleiner als der zweite Winkel (β) ist, die erste Drehwelle (32) relativ zu der Wellenhülse (31) gedreht wird und die erste Drehwelle (32) die zweite Drehwelle (33) antreibt, um diese relativ zu der Wellenhülse (31) zu drehen;
wobei die erste Drehwelle (32) und die zweite Drehwelle (33) einander gegenüberliegend angeordnet sind, der Positionsbegrenzungsmechanismus ein Positionsbegrenzungselement (331) und ein Drehelement (321) umfasst, das Positionsbegrenzungselement (331) auf einer der zweiten Drehwelle (33) und der ersten Drehwelle (32) angeordnet ist und das Drehelement (321) auf der anderen der zweiten Drehwelle (33) und der ersten Drehwelle (32) angeordnet ist; und
eine Vermeidungskerbe, die dazu konfiguriert ist, zu dem Drehelement (321) zu passen, an einem Ende ausgebildet ist, das zu dem Positionsbegrenzungselement (331) gehört und zu dem Drehelement (321) weist, um den Drehwinkel der ersten Drehwelle (32) relativ zu der zweiten Drehwelle (33) derart zu begrenzen, dass er kleiner oder gleich dem ersten Winkel (α) ist.

2. Scharnierstruktur (30) nach Anspruch 1, wobei das Positionsbegrenzungselement (331) eine Anschlussstirnfläche (3311) und einen Positionsbegrenzungsvorsprung (3312) umfasst, der von der Anschlussstirnfläche (3311) in Richtung des Drehelements (321) vorsteht, und die Anschlussstirnfläche (3311) senkrecht zu einer Drehachse des Drehelements (321) ist; und die Vermeidungskerbe zwischen dem Positionsbegrenzungsvorsprung (3312) und der Anschlussstirnfläche (3311) ausgebildet ist.

3. Scharnierstruktur (30) nach Anspruch 2, wobei ein Abschnitt, der zu dem Positionsbegrenzungsvorsprung (3312) gehört und der parallel zu der Anschlussstirnfläche (3311) ist, fächerförmig oder bogenförmig ist.

4. Scharnierstruktur (30) nach Anspruch 2, wobei der Positionsbegrenzungsvorsprung (3312) eine Lücke aufweist.

5. Scharnierstruktur (30) nach Anspruch 2, wobei ein Außendurchmesser des Positionsbegrenzungsvorsprungs (3312) kleiner als ein Außendurchmesser der Anschlussstirnfläche (3311) ist, um eine Wellenschulter auszubilden; oder
ein Außendurchmesser der Anschlussstirnfläche (3311) kleiner als ein Außendurchmesser der zweiten Drehwelle (33) ist, um eine Wellenschulter auszubilden.

6. Scharnierstruktur (30) nach Anspruch 1, wobei das Positionsbegrenzungselement (331) eine Anschlussstirnfläche (3311) und eine Positionsbegrenzungsnut (3313), die auf der Anschlussstirnfläche (3311) ausgebildet ist, umfasst und die Anschlussstirnfläche (3311) senkrecht zu einer Drehachse des Drehelements (321) ist; und
die Positionsbegrenzungsnut (3313) die Vermeidungskerbe ausbildet.

7. Scharnierstruktur (30) nach Anspruch 6, wobei ein Abschnitt, der zu der Positionsbegrenzungsnut (3313) gehört und der parallel zu der Anschlussstirnfläche (3311) ist, fächerförmig oder bogenförmig ist.

8. Scharnierstruktur (30) nach Anspruch 1, wobei die erste Drehwelle (32) drehbar in die zweite Drehwelle (33) durch ein Wellenloch passt.

9. Scharnierstruktur (30) nach Anspruch 1, wobei die zweite Drehwelle (33) einen Hülsenring (33A) aufweist und der Hülsenring (33A) auf die erste Drehwelle (32) aufgesteckt ist; und
der Positionsbegrenzungsmechanismus einen ersten Vorsprung (J), der an einer Innenwand des Hülsenrings (33A) ausgebildet ist, und einen zweiten Vorsprung (K), der an einer Außenwand der ersten Drehwelle (32) ausgebildet ist und dazu konfiguriert ist, zu dem ersten Vorsprung (J) zu passen, umfasst.

10. Scharnierstruktur (30) nach Anspruch 1, wobei die Wellenhülse (31) eine erste Wellenhülse (31A) und eine zweite Wellenhülse (31B) umfasst, die zueinander feststehend sind;
die erste Drehwelle (32) in die erste Wellenhülse (31A) hineinragt und um die Achse der ersten Drehwelle (32) relativ zu der ersten Wellenhülse (31A) gedreht werden kann und die erste Drehwelle (32) reibschlüssig in die erste Wellenhülse (31A) passt, wenn sie gedreht wird; und
die zweite Drehwelle (33) in die zweite Wellenhülse (31B) hineinragt und um die Achse der zweiten Drehwelle (33) relativ zu der zweiten Wellenhülse (31B) gedreht werden kann und die zweite Drehwelle (33) reibschlüssig in die zweite Wellenhülse (31B) passt, wenn sie gedreht wird.

11. Scharnierstruktur (30) nach Anspruch 10, wobei eine Reibscheibe (5) ferner zwischen der ersten Drehwelle (32) und der ersten Wellenhülse (31A) angeordnet ist und/oder eine Reibscheibe (5) ferner zwischen der zweiten Drehwelle (33) und der zweiten Wellenhülse (31B) angeordnet ist.

12. Scharnierstruktur (30) nach einem der Ansprüche 1 bis 11, wobei ein Stopperblock (312) an der Wellenhülse (31) angeordnet ist, ein Stopperelement (322) an der ersten Drehwelle (32) angeordnet ist und das Stopperelement (322) dazu konfiguriert ist, mit dem Stopperblock (312) zusammenzuwirken, um einen maximalen Winkel (β) zu begrenzen, in dem der erste Körper (10) relativ zu dem zweiten Körper (20) ausgeklappt wird.

13. Klappbare elektronische Vorrichtung, umfassend einen ersten Körper (10), einen zweiten Körper (20) und die Scharnierstruktur (30) nach einem der Ansprüche 1 bis 12.

## Revendications

1. Structure de charnière (30), utilisée dans un dispositif électronique pliable et comprenant un manchon d'arbre (31), un premier arbre rotatif (32) et un second arbre rotatif (33), dans laquelle le manchon d'arbre (31) est configuré pour se connecter à un premier corps (10) du dispositif électronique pliable, et le premier arbre rotatif (32) est configuré pour se connecter à un second corps (20) du dispositif électronique pliable ;
le premier arbre rotatif (32) s'étend dans le manchon d'arbre (31) et peut tourner autour d'un axe du premier arbre rotatif (32) par rapport au manchon d'arbre (31), et le premier arbre rotatif (32) s'ajuste par friction au manchon d'arbre (31) lors de la rotation ;
le second arbre rotatif (33) s'étend dans le manchon d'arbre (31) et peut tourner autour d'un axe du second arbre rotatif (33) par rapport au manchon d'arbre (31), et le second arbre rotatif (33) s'ajuste au manchon d'arbre (31) lors de la rotation ; et
dans un processus dans lequel le dispositif électronique pliable passe d'un état plié à un état déplié,
lorsqu'un angle inclus entre le premier corps (10) et le second corps (20) est inférieur ou égal à un premier angle (α), la structure de charnière (30) délivre un premier couple (T1) ;
lorsqu'un angle inclus entre le premier corps (10) et le second corps (20) est supérieur à un premier angle (α) et inférieur à un second angle (β), la structure de charnière (30) délivre un deuxième couple (T2), dans laquelle
le premier angle (α) est inférieur au second angle (β), et le deuxième couple (T2) est supérieur au premier couple (T1) ;
dans laquelle le premier couple (T1) est généré en raison de la rotation par friction du premier arbre rotatif (32) par rapport au manchon d'arbre (31) ;
lorsqu'un angle inclus entre le premier corps (10) et le second corps (20) est supérieur à un premier angle (α) et inférieur à un second angle (β), la structure de charnière (30) produit un troisième couple, dans laquelle le troisième couple est généré en raison du frottement de rotation entre le second arbre rotatif (33) et le manchon d'arbre (31) ; et
dans laquelle le deuxième couple (T2) est la somme du premier couple (T1) et du troisième couple ;
dans laquelle le premier arbre rotatif (32) peut également tourner autour de l'axe du premier arbre rotatif (32) par rapport au second arbre rotatif (33), et un mécanisme de limitation de position est disposé entre le second arbre rotatif (33) et le premier arbre rotatif (32), dans laquelle le mécanisme de limitation de position est configuré pour limiter un angle de rotation du premier arbre rotatif (32) par rapport au second arbre rotatif (33) à une valeur inférieure au premier angle (α) ; et
lorsque l'angle inclus entre le premier corps (10) et le second corps (20) est inférieur ou égal au premier angle (α), le premier arbre rotatif (32) tourne par rapport au manchon d'arbre (31), et le second arbre rotatif (33) est fixe par rapport au manchon d'arbre (31) ;
lorsque l'angle inclus entre le premier corps (10) et le second corps (20) est supérieur au premier angle (α) et inférieur au second angle (β), le premier arbre rotatif (32) tourne par rapport au manchon d'arbre (31) et le premier arbre rotatif (32) entraîne le second arbre rotatif (33) pour tourner par rapport au manchon d'arbre (31) ;
dans laquelle le premier arbre rotatif (32) et le second arbre rotatif (33) sont disposés à l'opposé l'un de l'autre, le mécanisme de limitation de position comprend un élément de limitation de position (331) et un élément rotatif (321), l'élément de limitation de position (331) est disposé sur l'un du second arbre rotatif (33) et du premier arbre rotatif (32), et l'élément rotatif (321) est disposé sur l'autre du second arbre rotatif (33) et du premier arbre rotatif (32) ; et
une encoche d'évitement configurée pour s'adapter à l'élément rotatif (321) est formée à une extrémité qui est de l'élément de limitation de position (331) et qui fait face à l'élément rotatif (321), pour limiter l'angle de rotation du premier arbre rotatif (32) par rapport au second arbre rotatif (33) à une valeur inférieure ou égale au premier angle (α).

2. Structure de charnière (30) selon la revendication 1, dans laquelle l'élément de limitation de position (331) comprend une face d'extrémité de connexion (3311) et un bossage de limitation de position (3312) qui fait saillie depuis la face d'extrémité de connexion (3311) vers l'élément rotatif (321) et la face d'extrémité de connexion (3311) sont perpendiculaires à un axe de rotation de l'élément rotatif (321) ; et
l'encoche d'évitement est formée entre le bossage de limitation de position (3312) et la face d'extrémité de connexion (3311).

3. Structure de charnière (30) selon la revendication 2, dans laquelle une section qui est du bossage de limitation de position (3312) et qui est parallèle à la face d'extrémité de connexion (3311) est en forme d'éventail ou en forme d'arc.

4. Structure de charnière (30) selon la revendication 2, dans laquelle le bossage de limitation de position (3312) présente un espace.

5. Structure de charnière (30) selon la revendication 2, dans laquelle un diamètre extérieur du bossage de limitation de position (3312) est inférieur à un diamètre extérieur de la face d'extrémité de connexion (3311) pour former un épaulement d'arbre ; ou
un diamètre extérieur de la face d'extrémité de connexion (3311) est inférieur à un diamètre extérieur du second arbre rotatif (33) pour former un épaulement d'arbre.

6. Structure de charnière (30) selon la revendication 1, dans laquelle l'élément de limitation de position (331) comprend une face d'extrémité de connexion (3311) et une rainure de limitation de position (3313) formée sur la face d'extrémité de connexion (3311), et la face d'extrémité de connexion (3311) est perpendiculaire à un axe de rotation de l'élément rotatif (321) ; et
la rainure de limitation de position (3313) forme l'encoche d'évitement.

7. Structure de charnière (30) selon la revendication 6, dans laquelle une section qui est de la rainure de limitation de position (3313) et qui est parallèle à la face d'extrémité de connexion (3311) est en forme d'éventail ou en forme d'arc.

8. Structure de charnière (30) selon la revendication 1, dans laquelle le premier arbre rotatif (32) s'ajuste en rotation au second arbre rotatif (33) à travers un trou d'arbre.

9. Structure de charnière (30) selon la revendication 1, dans laquelle le second arbre rotatif (33) présente un manchon annulaire (33A), et le manchon annulaire (33A) est emmanché sur le premier arbre rotatif (32) ; et
le mécanisme de limitation de position comprend une première saillie (J) formée sur une paroi interne du manchon annulaire (33A) et une seconde saillie (K) qui est formée sur une paroi externe du premier arbre rotatif (32) et qui est configurée pour s'adapter à la première saillie (J).

10. Structure de charnière (30) selon la revendication 1, dans laquelle le manchon d'arbre (31) comprend un premier manchon d'arbre (31A) et un second manchon d'arbre (31B) qui sont fixes l'un par rapport à l'autre ;
le premier arbre rotatif (32) s'étend dans le premier manchon d'arbre (31A) et peut tourner autour d'un axe du premier arbre rotatif (32) par rapport au premier manchon d'arbre (31A), et le premier arbre rotatif (32) s'ajuste par friction au premier manchon d'arbre (31A) lors de la rotation ; et
le second arbre rotatif (33) s'étend dans le second manchon d'arbre (31B) et peut tourner autour de l'axe du second arbre rotatif (33) par rapport au second manchon d'arbre (31B), et le second arbre rotatif (33) s'ajuste par friction au second manchon d'arbre (31B) lors de la rotation.

11. Structure de charnière (30) selon la revendication 10, dans laquelle une rondelle de friction (5) est également disposée entre le premier arbre rotatif (32) et le premier manchon d'arbre (31A), et/ou une rondelle de friction (5) est également disposée entre le second arbre rotatif (33) et le second manchon d'arbre (31B) .

12. Structure de charnière (30) selon l'une quelconque des revendications 1 à 11, dans laquelle un bloc d'arrêt (312) est disposé sur le manchon d'arbre (31), un élément d'arrêt (322) est disposé sur le premier arbre rotatif (32), et l'élément d'arrêt (322) est configuré pour fonctionner avec le bloc d'arrêt (312), afin de limiter un angle maximum (β) auquel le premier corps (10) est déplié par rapport au second corps (20).

13. Dispositif électronique pliable, comprenant un premier corps (10), un second corps (20) et la structure de charnière (30) selon l'une quelconque des revendications 1 à 12.
